# EUROPEAN PATENT SPECIFICATION

(11) **EP 3 159 796 B1**
(45) Date of publication and mention of the grant of the patent: **15.06.2022**
(21) Application number: 16189766.5
(22) Date of filing: 20.09.2016
(51) Int. Cl.: G06F 11/14, G06F 11/20

(54) **SYSTEM AND METHOD FOR GENERATING BACKUPS OF A PROTECTED SYSTEM FROM A RECOVERY SYSTEM**
SYSTEM UND VERFAHREN ZUR ERZEUGUNG VON SICHERUNGSKOPIEN EINES GESCHÜTZTEN SYSTEMS AUS EINEM RÜCKGEWINNUNGSSYSTEM
SYSTÈME ET PROCÉDÉ POUR GÉNÉRER DES OPÉRATIONS DE SAUVEGARDE D'UN SYSTÈME PROTÉGÉ À PARTIR D'UN SYSTÈME DE RÉCUPÉRATION

(30) Priority: 21.09.2015 US 201514859810
(43) Date of publication of application: 26.04.2017
(73) Proprietor: Zerto Ltd., 46725 Herzliya (IL)
(72) Inventor: MAMLUK, Ori, Meuchad (IL); KEDEM, Oded, 6920404 Tel-Aviv (IL)
(74) Representative: Pearl Cohen Zedek Latzer Baratz UK LLP

(56) References cited:
- US-A1- 2005 022 213
- US-A1- 2005 182 953
- US-A1- 2005 235 016
- US-A1- 2014 201 142

## Description

### FIELD OF THE INVENTION

The present invention relates generally to generating backups of a protected system. More specifically, the present invention relates to generating backups of a protected system from a recovery system.

### BACKGROUND OF THE INVENTION

Data protection systems and methods are known in the art. Generally, data protection systems copy data from a protected storage or system to a recovery storage or system. For example, systems that replicate the content of disks to a recovery system or site, e.g., in a different geographic location are known. Data in a recovery site typically includes information related to the protected disks or storage system, e.g., history as known in the art. Historical information enables recovering disk content at any point in time within a specified history.

Replacing a system with a replica generated by the recovery system is referred to in the art as fail-over. For example, a user can fail-over a system in an organization (including disks or other storage systems) by initiating a system at a recovery site and be provided with disks' content of the organization's system by the system at the recovery site.

A fail-over can be done for a specific point in time. For example, a system (e.g., a disk) at a recovery site can be configured to replace a protected system such that content in the system at a recovery site is same or similar to the content that was stored in the protected system at a specified date or time.

Typical scenarios that will result in failing-over of a protected system may, for example, occur when the protected system is inaccessible, or may include a planned migration of a protected system from a protected site to a recovery site or recovery system. For instance, suppose that the user protects a system that is, or serves as, a mail exchange server. If a hurricane hits the site that runs the protected system, the user can fail-over the protected system to a recovery site or recovery system with the latest available point in time and enable end users to use the failed-over (or recovery) system in the recovery site as their mail exchange server.

Object storage (also known as object-based storage) is known in the art. Object storage techniques or object-based storage systems or architectures are available, e.g., the online storage web service S3 offered by Amazon. Object Storage technique uses a digital data storage architecture or platform that stores and manages data as objects or containers (e.g., buckets in S3). Object Storage is simpler than other architectures (e.g., file system) and offers advantages such as scalability and low cost.

Backup is a method for creating a set of copies of the protected system, each corresponding to a different point in time, enabling the user to revert back to a previous state of his protected system when the need arises.

Current backup technologies create the backup entities from the protected system. A backup application reads either the disk or the write operations that are sent to the disk, and stores backups or incremental backups (e.g., storing only the changes from previous backup). One drawback of the current methodology is that it impacts the protected system, since it operates on the protected system.

Incremental backup is known in the art. Generally, an incremental backup saves storage space by only storing, in a backup or recovery system, changes that occurred since the last backup (that may be a full or incremental backup). Rather than repeatedly backing up all data in a protected storage system every hour, day or month (e.g., by storing all the data in the protected storage in the recovery system), an incremental system or method only stores changes from the previous backup. For example, files that were not changed between a previous backup and a current incremental backup are not saved by an incremental backup. Typically, a full backup is created and incremental backups that only record or save changes that occurred after the full backup are made. To provide a replica of a protected system, data in one or more incremental backups made after a full backup is applied to, or combined with, the full backup.

However, current systems and methods for incremental backup suffer from a number of drawbacks. Some systems and methods generate an incremental backup by comparing two full backups, identifying differences, known in the art as deltas, and storing the deltas as the incremental backup. Accordingly, current systems and methods may require substantial computing resources needed for comparing large amounts of data as well as considerable storage space for storing at least two full backups.

US 2005/0182953 discloses a method for browsing objects on a protected volume in a continuous data protection system by displaying a list of top-level objects to a user who selects a top-level object to browse. Delta maps provide a mechanism to efficiently recover the primary volume as it was at a particular point in time without the need to replay the write log in its entirety, one write at a time. In particular, delta maps are data structures that keep track of data changes between two points in time.

US20050022213 teaches a method to synchronize the state of an application and an application's objects with data stored on the storage system. The storage system provides API's to create special data, called a marker journal, and stores it on a journal volume. The marker contains application information, e.g. file name, operation on the file, timestamp, etc. Since the journal volume contains markers as well as any changed data in the chronological order, IO activities to the storage system and application activities can be synchronized.

US20050235016 teaches method and apparatus which provide solutions for avoiding journal overflow in after and before journal methods of a backup and recovery system used with a storage system, including switching to bitmap management when the journal volume is full.

US20140201142 teaches data storage system that can allow users to share a portion of a file (e.g., a document) in secondary storage. The user may specify a portion of a secondary storage file to share and send a link to the portion to another user. The other user can access the shared portion from the link, and just the shared portion may be restored from secondary storage. The data storage system can also provide a native view of secondary storage data on a client computer.

### SUMMARY OF THE INVENTION

According to embodiments of the present invention, there is provided a system and method of protecting data of a protected storage system in a recovery system including a volatile memory a journal and a target disk, the system and method may include: storing, in the volatile memory, a memory changed block tracking (CBT) object, the memory CBT object including a plurality of elements representing a plurality of storage units in the protected storage system to track changes since a last backup; storing a copy of the CBT object in a storage system to produce a stored CBT object; storing in a target disk in the recovery system a replica of the protected storage system from before a time window; upon detecting a recent modification of data in a storage unit in the protected storage system, storing in a journal in the recovery system data and metadata related to the modification, and modifying, in the memory CBT object, an element that represents the storage unit to indicate the storage unit was modified, wherein the metadata includes time the data was modified and wherein the journal stores modifications related to a specific time window; periodically removing from the journal old data related to at least one past modification of a storage unit in the protected storage system that occurred before the time window, and applying the old data to the target disk; and upon removing, if the stored CBT object does not include an indication of the at least one past modification, storing a copy of the memory CBT object in the storage system to update the stored CBT object, and clearing the memory CBT and the stored CBT object after a backup.

A system and method for generating incremental or partial backups may be provided.

A system and method may include loading a stored CBT object into a memory to produce a CBT object; and marking in the CBT object, storage units (e.g., marking representations of the storage units) in the protected storage system that were modified based on traversing the journal to thereby produce a CBT object usable for an incremental backup. For example, marking storage units may be, or may include, setting, in a bitmap, a bit representing the storage unit. A storage unit may be any unit of data in a storage system, e.g., a block of data in a hard drive, a sector in a hard drive and the like. As known in the art, different storage systems may use different storage units, it will be understood a storage unit as referred to herein may be any unit of data used by a storage system.

A system and method may include creating a backup for the protected storage system for a selected time point; clearing the CBT object and the stored CBT object; and marking in the CBT object, storage units in the protected storage system that were modified after the time point based on traversing the journal from the time point to the end of the journal to thereby produce a CBT object usable for an incremental backup.

A system and method may include loading a stored CBT object into a volatile memory to produce a start CBT object; upon removing, marking the storage unit in the start CBT object; receiving a selected time point for an incremental backup; and marking, in the start CBT object, storage units that were modified by traversing the journal from a time point of a previous backup to the selected time point to thereby produce a CBT object usable for an incremental backup.

A system and method may include creating an incremental backup by storing, on a storage system, a copy of data in a storage unit if the storage unit is marked in the CBT object.
Fig. 2 is an overview of a system according to some embodiments of the present invention;
Fig. 3 shows a flowchart of a method for journaling in a recovery system according to some embodiments of the present invention;
Fig. 4 shows a flowchart of a method for applying the journal to the target disk according to some embodiments of the present invention;
Fig. 5 shows a flowchart of a method for creating a disk replica from the journal and the target disk according to some embodiments of the present invention;
Fig. 6 shows a flowchart of a method for generating backups from protected data in a recovery system according to some embodiments of the present invention;
Fig. 7 shows high level block diagram of an exemplary computing device according to some embodiments of the present invention; and
Fig. 8 shows a flowchart of a method for generating an incremental backup according to some embodiments of the present invention.

It will be appreciated that for simplicity and clarity of illustration, elements shown in the figures have not necessarily been drawn accurately or to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although some embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items. Unless explicitly stated, the method embodiments described herein are not constrained to a particular order or sequence. Additionally, some of the described method embodiments or elements thereof can occur or be performed simultaneously, at the same point in time, or concurrently.

A system and method according to some embodiments of the invention may store data obtained from a protected system in a recovery system. Data in a recovery system may be stored in for example two containers: a journal that may store all latest or recent writes to a protected system in a configured history period or time window; and a target disk data container that may store or save the rest of the data written to the protected system, e.g., a replica of the protected storage system from a predetermined time point. For example, if a protected disk or machine is configured to have one (1) hour history, then data in a target disk at a recovery system may contain a copy of content of the protected disk from one hour ago, and a journal may contain a copy of all writes to the protected disk that were done in the last hour. As used herein the term target disk may refer to a data storage, for example, a plurality of objects (in the same or in other object storage as the journal), or any other data storage that may serve as data container that may store or save the data written to the protected system before the time window, e.g., data written to the protected system that is not saved in the journal.

In some embodiments, a recovery system may be located in a remote site (recovery site). For example, a remote site may be geographically remote from the protected system. For example, a protected system may be located in a first city or state and a recovery system may be located in another city or state. In other embodiments, a recovery system may be co-located with the protected system or even embedded in the protected system. It will be understood that a protected system as referred to herein may be any applicable digital content storage system. For example, a protected system may be a set or array of computer data storage disks attached to a computer or server (e.g., a redundant array of independent disks (RAID) as known in the art), or it may be a virtual machine (VM) connected to one or more virtual disks as known in the art.

A system and method according to some embodiments of the invention may generate backups of the protected system from the recovery system. For example, a system and method according to embodiments of the invention may generate backups periodically from the recovery system. Generating backups of protected systems by copying the data or content directly from the protected system as known in the art usually loads or burdens the protected system. For example, users of the protected system may experience slow response times when using the protected system while backup is being generated. Backup generation may consume network resources as well. For example, if backups are sent from the protected system to a remote backup server, this may consume network bandwidth that may again slow the overall response time of the protected system and have negative effect on the user experience. If, however, backups are generated from the recovery site, the burden of generating the backups, including substantially all associated negative effects, are moved from the protected system to the recovery system and are therefore invisible to users of the protected system. Thus, generation of backups from the recovery system does not load the protected system and does not interfere with the normal operation of the protected system.

A system and method according to some embodiments of the invention may include a number of units or processes. For example, a first unit, process or method may capture data written to, or stored on, a disk of a protected system, e.g., a physical, a virtual disk or a virtual machine (VM). A second unit, process or method may insert a copy of the captured data into a journal as further described herein. A third unit, process or method may extract data related to data writes in a journal and apply the data writes to a target disk as further described herein. As used herein, applying the data to a target disk may refer to the process of copying content from the journal to the target disk and deleting the copied content and related metadata from the journal. A fourth unit, process or method may use the journal and the target disk to generate, create or prepare disk replica of the protected disk or system, where the replica is from a certain or selected point in time. Of course, less units, or a single unit, may perform some or all of the tasks or methods described herein or more than four units or processes may be used in some embodiments. Some embodiments of the invention may continuously protect data of any storage system. Although VM is mainly referred to herein, it will be understood that any storage system (e.g., hard disk) may be protected by a system and method according to some embodiments of the invention as described herein. According to some embodiments of the present invention, a fifth unit, process or method may activate, e.g., periodically, generation of a disk replica from a selected point in time, and may store the disk replica as a backup of the protected system from the selected point in time.

Generally, storing data in a journal and updating a target disk may be an on-going, or automatic, process or operation, e.g., continuously performed in order to enable fail-over at any point in time. Using the journal and the target disk to generate, create and/or provide a copy (or replica) of a protected disk may be done based on, or in response to, a command from a user or from a backup application.

For example, in an exemplary flow according to an embodiment, a disk is protected with a 6 hours history window. In the exemplary flow, data written to a protected disk is captured, intercepted or otherwise obtained (e.g., copied from a disk after it was written thereto) and sent or provided to a unit in a recovery system (or at a recovery site). The unit writes the data to a journal. Six hours later, the data may be automatically deleted or removed from the journal and written or applied to a target disk. In order to create or provide a disk replica, image or replication (e.g., as instance containing the same data) of the protected disk for a certain point in time, e.g. one hour ago, a unit may apply to the target disk data from the start of the journal up to the write that happened one hour ago. In some embodiments, a replica of the protected disk for a certain point in time may be generated by copying content from either the target disk or the journal as will be further described herein.

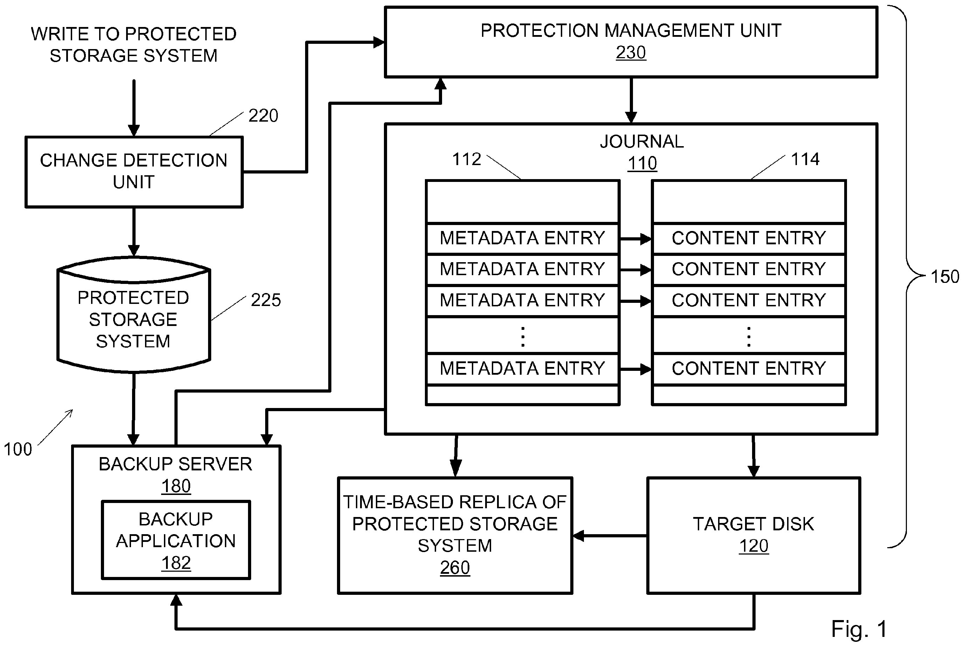

Reference is made to Fig. 1, which is an overview of a system 100 and flows according to some embodiments of the present invention. Fig. 1 depicts a disaster-recovery system with backup capabilities according to embodiments of the present invention. System 100 includes , *inter alia*, a recovery system 150, a protected storage system 225 and a backup server 180. Recovery device or system 150 includes a protection management unit 230, a journal 110 (e.g. one or more data constructs, data structures, or databases) and a target disk 120.

As shown, system 100 may include a change detection unit 220 that may (e.g., may be configured to) capture, intercept or otherwise obtain writes or other changes to protected storage system 225. For example, change detection unit 220 may copy data or content in input/output (IO) operations as, or when they occur. In another case, change detection unit 220 may use snapshots, e.g., periodically take a snapshot of, or scan, a protected storage system, identify changes in the protected storage system and send data and metadata to protection management unit 230 based on changes, e.g., data written after the previous snapshot may be sent to protection management unit 230. A snapshot of a protected system as referred to herein may include a list or description of data stored in the protected system at a particular point in time or during a particular time window or period. For example, a snapshot may include a list of files or blocks stored in a protected system, the size of the files, modification times of the files or blocks and so on. Accordingly, a previous and a subsequent snapshot may be used to identify changes made to a protected storage system, e.g., addition of files or data, or changes of memory blocks. Scanning a protected storage system may include listing or identifying content on the storage system. A subsequent scan may be used to identify differences made to the protected storage system, e.g., modifications of files or blocks etc. Additionally or alternatively, changes may be identified using data or an object that includes a list of changed blocks between two consequent snapshots, for example, a Changed Block Tracking (CBT) object. As used herein, a memory block or a block may refer to a fixed-size memory chunk.

Protected storage system 225 may be any applicable storage system, e.g., a disk, computer disk storing computer readable data, or a virtual disk used by a VM. Any suitable storage system may be a protected system or protected storage system 225 according to some embodiments of the invention. Generally, a protected storage system 225 as referred to herein may be any system used for storing digital information. A protected system or protected storage system 225 may be any system for which recovery system 150 as described herein maintains (e.g., stores or keeps) data and information such as metadata. It will be understood that the scope of the invention is not limited by the type of protected storage system 225. Journal 110 includes a plurality of metadata entries 112 and a plurality of content entries 114. As shown, system 100 includes or generates and provide, a time-based replica 260 of protected storage system 225. A journal as referred to herein is or includes a set of digital content entries organized and stored in files, memory segments and the like. As described herein, a journal includes a set of metadata entries 112 that store metadata related to writes to protected system 225 and a set of content entries 114 that include the actual data or content written to, or stored on, protected system 225. Journal 110 includes metadata and actual data relevant to a time period or window. For example, journal 110 may include data and metadata related to write operations performed in the last hour. Metadata related to write operations include the time data was written, the address the data was written to, the amount or size of data and so on. Metadata may be any information associated or related to the write operation and/or the actual data written in a write operation. Metadata as referred to herein may be any information or data other than the actual data or payload stored, added, deleted or modified in a protected system. For example, actual data or payload may be the contents of a file, block or other storage unit and metadata may be the name of the file, the address of a data block, a time data was written and so on. For example, metadata may be any information related to a modification of data in the protected storage system. For example, information related to a modification of data in the protected storage system is a time the data was modified, the address of the data in the protected system, the amount or size of data modified, written or deleted and so on.

According to some embodiments of the invention, actual content or data and metadata related to a time window or time period not covered by a journal may be stored in a target disk data construct (e.g., target disk data 120).

In some embodiments, change detection unit 220 may detect changes in protected storage system 225, for example, by intercepting write operations or by identifying changes in snapshots. For example, changes in protected system detected by detection unit 220 may be changes or modifications of data stored in protected storage system 225, e.g., a change may include writing of new data to protected storage system 225, deleting data from protected storage system 225 or modifying data in protected storage system 225. Detection unit 220 may detect and record any information related to a change of data in protected storage system 225. For example, the address to which data was written and the time the data was written may be detected, identified and recorded. Detection unit 220 may detect and record the time data was modified or deleted, the address of deleted or modified data and so on. Detecting changes by change detection unit 220 may include capturing the data (actual content) being written as well as capturing metadata. For example, metadata captured or generated by change detection unit 220 may include the time of the write operation (timestamp), an offset (or address) of the write, the size or length of data written or any other metadata related to the write operation or the content being written. Any metadata captured or calculated as described herein may be included in metadata entries organized and stored in files, memory segments and the like. Offsets or address in a storage device, e.g., in protected storage system 225, in journal 110 or target disk 120, may be given in any applicable manner or unit, for example in bytes, megabytes, in blocks of memory, etc.

Data captured, generated or calculated by change detection unit 220 may be provided to protection management unit 230. For example, change detection unit 220 may send or transmit captured data and captured or generated metadata to protection management unit 230. Protection management unit 230 may store (e.g., may be configured to store) captured data in a content entry 114 in journal 110 and may further insert metadata related to the write operation into one or more metadata entries 112. Protection management unit 230 may associate the metadata entry 112 with the corresponding content entry 114, e.g., by including a pointer or a reference in the metadata entry 112 to the location of the content entry 114 in journal 110. Metadata captured, calculated or generated by change detection unit 220 may be, for example, an address or offset to which data is written on protected storage system 225, the time the data was written, an identification of a user or application that wrote the data and so on.

Generally, a protected storage system as shown by protected storage system 225 may be any storage system, e.g., a disk or a virtual machine. A recovery system 150 may create a time based replica of a protected storage system 225 as shown by block 260. Recovery system 150 used to protect protected storage system 225 may be a distributed system, e.g., protection management unit 230 may be a unit in a first location (e.g., geographic location, building, etc.), journal 110 may be stored and maintained in a second location and target disk data 120 may be in a third location. As described, in other embodiments, recovery system 150 may be located near (or embedded in) protected storage system 225.

When write data arrives from change detection unit 220, the content of the write operation may be written to a new content entry 114 in journal 110 and the information about the write may be written to a new metadata entry 112 in journal 110. According to some embodiments of the present invention, content entries 114 and metadata entries 112 may be arranged in journal 110 in segments, e.g., segments having a size of 16MB (16MB segments). At any time, there may be an active (e.g., available for writing) metadata segment and an active content segment. In writing a content entry 112 or a metadata entry 114 to journal 110, the content entry 112 or metadata entry 114 will be added to the current content segment or metadata segment, respectively, if there is enough space to accommodate the entry in the segment, otherwise a new segment will be allocated. A journal as referred to herein may be, or may include, a set of digital content segments, e.g., files, memory segments and the like.

In some embodiments, protection management unit 230, journal 110 and target disk 120 may be local units or elements, e.g., at the same location as protected storage system 225. For example, the same server or servers in the same data center may host protection management unit 230, journal 110 and target disk 120 and protected storage system 225. In other embodiments, components of system 100 may be distributed. For example, protected storage system 225 may be located in a data center, journal 110 and target disk 120 may be installed in a remote site and protection management unit 230 may be included in a server on the internet.

According to some embodiments of the invention, data of protected storage system 225 replicated in recovery system 150 may be stored in target disk 120 and journal 110. In some embodiments, metadata entries 112 in journal 110 are stored or maintained in a first in first out (FIFO) structure as known in the art, where elements are inserted into a list or container in the order received and are further removed from the container or list according to the order inserted. For example, metadata entries related to writes (or write operations) in protected storage system 225 may be added into journal 110 according to the order, in time, of the write operations. For example, metadata entries 112 are arranged in as FIFO list or stack such that the order of writes to protected storage system 225 is stored or maintained or reflected by the list of metadata entries 112.

Metadata entries 112 and content entries 114 in journal 110 only include information related to a specific history, time period or time window, and copy of data written to protected storage system 225 before that time window is stored in target disk 120. For example, if a history of 24 hours is to be stored or kept for protected storage system 225, then metadata entries 112 and content entries 114 in journal 110 may include information (metadata and actual content) related to the past or last 24 hours and data related to writes that occurred more than 24 hours ago is stored in target disk 120.

For example, each metadata entry 112 may include the address to which data was written to protected storage system 225. For example, the address may be in the form of an offset in a virtual disk (e.g., a block or sector number). A metadata entry 112 may include the length, amount or size of data written to protected storage system 225. A metadata entry 112 may include a reference to a copy of data written to the protected system and stored in a content entry 112. For example, a metadata entry 112 may include a reference to one of content entries 114. A metadata entry 112 may include a location or identifier of the content entry 114 that stores the actual data or content written, such that using a metadata entry 112, the actual content may be found.

Target disk 120 may store, represent, or include, contents of storage system 225. However, if the protected system has no data stored in a certain address space then the target disk may not include the empty address space. Accordingly, according to some embodiments of the invention, space required by target disk 120 may be less than the overall size of protected storage system 225.

A system and method according to some embodiments of the invention may apply data in journal 110 to target disk 120. A system and method according to some embodiments of the invention may use journal 110 and target disk 120 to create a disk replica for fail-over, e.g., failing-over of protected storage system 225 to an alternative disk or storage system. A system and method according to some embodiments of the invention may use journal 110 and target disk 120 to create disk replicas for backup purposes.

A system and method according to some embodiments of the invention may use a data structure referred to herein as a region-locator. A region-locator, or a plurality of region-locators, may be generated and used for applying data from journal 110 to target disk 120 and for creating a disk replica, as disclosed herein. A region-locator may be used to determine whether or not data was ever written to an offset in protected storage system 225 at a specified time and, therefore, whether or not data should be written to the corresponding offset in target disk 120. A region-locator may be used to determine, identify or locate, for each offset in protected storage system 225, the last write to the offset before a specified time as represented or included in journal 110. For example, without a region-locator described herein, in order to know or obtain the content that was last written to a particular offset, e.g., offset 0, in protected storage system 225 as stored or represented in journal 110, a unit would need to traverse all metadata entries 112 in journal 110 to find the latest write, if any, to offset 0. Using a region-locator, only once a unit needs to traverse or examine the set of metadata entries 112.

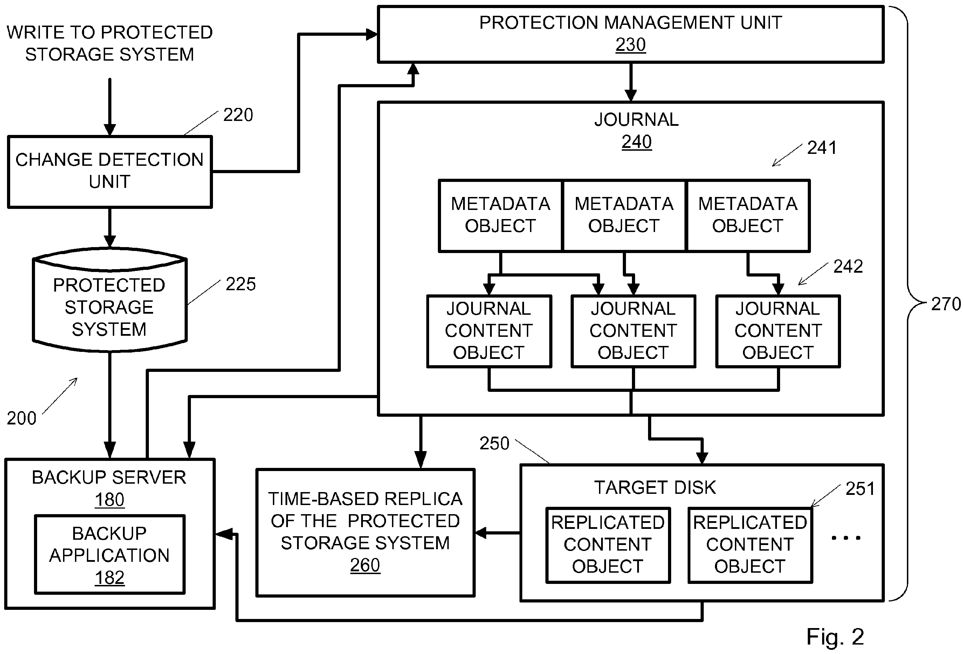

Reference is made to Fig. 2, which is an overview of a system 200 and flows according to some embodiments of the present invention. Similar components depicted in several figures, e.g., change detection unit 220, protection management unit 230 and backup server 180 are given the same reference numerals, and will generally not be described again. Fig. 2 depicts an object based disaster-recovery system with backup capabilities according to some embodiments of the present invention. System 200 may include an object-based recovery system 270, a protected storage system 225 and a backup server 180. As shown, object-based recovery system 270 may include protection management unit 230, object-based journal 240 and object-based target disk 250.

In some embodiments, protection management unit 230, journal 240 and target disk 250 may be local units or elements, e.g., at the same location protected storage system 225. For example, the same server or servers in the same data center may host protection management unit 230, journal 240 and target disk 250 and protected storage system 225. In other embodiments, components of system 200 may be distributed. For example, protected storage system 225 may be located in a data center, journal 240 and target disk 250 may be installed in a remote site and protection management unit 230 may be included in a server on the internet.

Object-based journal 240 may include one or more metadata objects 241 and one or more journal content objects 242. Content objects 242 may include, store or keep actual data (or payload) as known in the art. For example, metadata objects 241 may include, store or keep metadata related to actual data included in content objects 242. Object-based target disk 250 may include one or more replicated content objects 251. As further shown, object-based recovery system 270 may include or generate and provide a time based replica of protected storage system 225. Journal 240 may include a set of metadata objects 241 configured to store the metadata entries and a set of journal content objects 242 configured to store the content entries.

Metadata objects 241 and content objects 242 described herein may be objects used in object storage techniques (e.g., object-based storage) as known in the art. For example, content objects 242 and other objects shown in Fig. 2 may be written to, or stored in, a storage system using a single command or operation. As known in the art, when using an object storage technique or architecture (or object-based storage), an object cannot by modified, e.g., the way a file in a file system is modified. For example, in order to modify portion of an object, one needs to obtain the object, modify the object, and then re-write the entire object into the object-based storage. For example, known systems and methods that use object-based storage technique for backup and disaster recovery simply store objects that include replicated data into objects. When the data to be backed up changes, known systems and methods re-write the objects. For example, an object that includes data of a protected disk is re-written every time data on the protected disk changes. Clearly, these methods and systems are inefficient since they need to re-write large amounts of data in order to reflect small changes in the protected systems.

According to some embodiments of the invention, data in journal 240 and in target disk 250 is stored in small, fixed-size objects. For example, in an embodiment, objects of 16 megabytes (MB) are used. While 16MB objects are mainly referred to herein, it will be understood that any other size of objects may be applicable and the scope of the invention is not limited by the size of objects used. For example, objects of 8MB or 32MB may be used. The size of objects used may be according to a configuration parameter or value and may be decided upon based on analyzing a protected system. For example, object size of a system may be selected based on a typical size of write operations, cost, characteristics of the object storage, storage management considerations, performance etc. Similarly, metadata objects 241 may have different size than journal content objects 242 and replicated content objects 251.

Using small object size in journal 240 and in target disk 250 enables systems and methods of the invention to limit or dramatically reduce the amount of data that is being re-written into object storage as part of writing new data to journal 240 or applying data from journal 240 to target disk 250. For example, using 16MB content objects, adding data to journal 240 to represent a write operation to protected storage system 225 would only require writing 16MB of data whereas, if journal 240 was stored or kept in a single object, adding data to journal 240 to represent a single write to protected storage system 225 would necessitate re-writing the entire journal 240.

Information in journal 240 is generally divided into two categories, metadata (in metadata objects 241) and actual data or content (in content objects 242). For each write to protected storage system 225, there is, in one embodiment, a single metadata entry (e.g., metadata entry 112) with the write information, and one content or data entry (e.g., content entry 114) with content of the write. In some embodiments, metadata and a copy of actual data written to protected storage system 225 are saved on different or separate, small, fixed size, disk objects. The order of the writes is maintained in a metadata stream. For example and as shown in Fig. 2, metadata objects 241 are maintained as a stream of objects that are chained according to the order of writes to protected storage system 225. A metadata object in metadata objects 241 may include one or more metadata entries, each corresponding to a write of data to protected storage system 225. The metadata entries in each of metadata objects 241 may be ordered according to the order, in time, of the related writes to protected storage system 225. Accordingly, the chronological order of writes to protected storage system 225 is maintained by the stream of metadata objects 241 and by the metadata entries in metadata objects 241.

As described, metadata objects 241 may be objects of small size (e.g., 16MB) and may each contain a plurality of metadata entries. For example, each metadata entry in each of metadata objects 241 may include the address to which data was written to protected storage system 225. For example, the address may be in the form of an offset in a virtual disk (e.g., a block or sector number). An entry in each of metadata objects 241 may include the length, amount or size of data written to protected storage system 225. A metadata object 241 may include a reference to a copy of data written to target disk data 250. A metadata object 241 may include a reference to a copy of data written to the protected system and stored in a content object 242. For example, a metadata object 241 may include a reference to one of content objects 242.

An entry in each of metadata objects 241 may include a location or identifier of the content object 242 that stores the actual data or content written. For example, a name of the content object 242 that stores the actual data may be included in a metadata entry in one of metadata objects 241 such that using a metadata entry in metadata objects 241, the actual content may be found.

A metadata entry in each of metadata objects 241 may include an offset in the content objects 242. For example, a content object 242 may include data corresponding to a number of write operations. For example, data written to protected storage system 225 in a first write operation may be stored at offset 0 blocks in one of content objects 242 and data written to protected storage system 225 in a second write operation may be stored at offset 12 blocks in the same content object. Accordingly, a first metadata entry, corresponding to the first write, in one of metadata objects 241 may point to offset 0 blocks in the content object included in content objects 242 and a second entry in the metadata object may point to offset 12 blocks in the same content object. A metadata entry in each of metadata objects 241 may include a timestamp that enables determining the time the write to protected storage system 225 was made.

As described, the metadata entries may be fully ordered. The objects that contain the metadata stream may be maintained as a list, and inside a metadata object the write order may match the metadata entry order. The actual content written to protected storage system 225 may be stored in content objects 242 that may be small, fixed size objects. The actual content written to protected storage system 225 and stored in content objects 242 may be pointed to from within the metadata write entries in metadata stream 241.

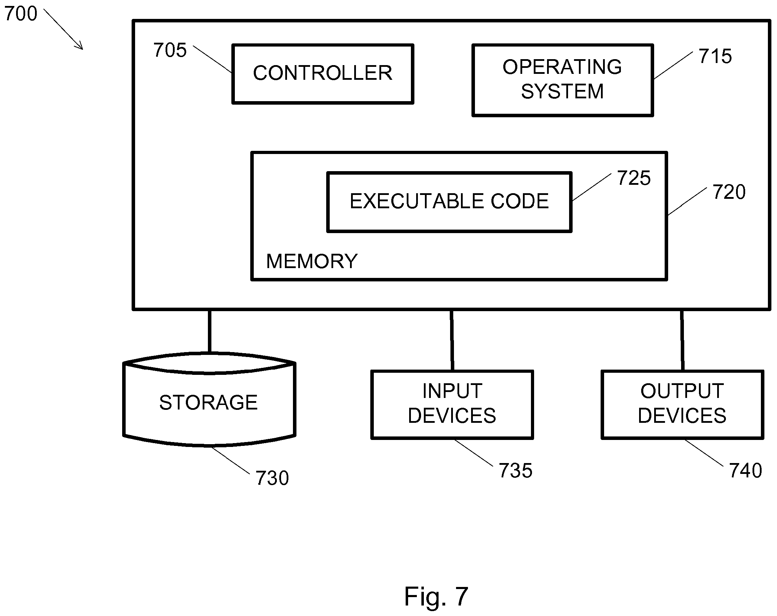

A flow of adding protected disk writes to journal 240 may include accumulating writes data in memory. For example, a 0.5MB, 1MB or 2MB, or another size of memory chunks or segments may be allocated (e.g., controller 705 included in protection management unit 230 may allocate a segment in memory 720 or on storage 730, controller 705, memory 720 and storage 730 are depicted in Fig. 7) and data captured by change detection unit 220 may be stored in the memory segments. 1MB or another size of memory chunks or segments may be allocated on any suitable storage system or device, e.g., a memory, disk, flash device, etc. According to some embodiments, the memory chunks or segments may be allocated on the object storage itself, as temporary smaller objects. When filled with data, the memory chunks or segments may be stored at one of content objects 242 in journal 240 as disclosed herein, and the memory chunks or segments may be deleted.

A method or flow may include allocating a journal content object (e.g., a journal content object in content objects 242), designating a content object 242 as the current object and writing the data from the memory segment to the content object. If the current content object cannot accommodate the copy data of the data written to protected storage system 225, e.g., because it is already closed or full, the method embodiment or flow may include allocating another content object and designating it the current content object.

The flow may further include writing information into metadata entries and setting a pointer or reference in a metadata entry such that the corresponding data or content in the content object 242 can be accessed using the metadata entry. If there is not enough space to accommodate the metadata entries of in the current metadata object, the method embodiment or flow may include allocating a new metadata object, and designating it the current metadata object. For example, protection management unit 230 may always use one of metadata objects 241 as the current metadata object and one of content objects 242 as the current content object. When a metadata object is full or cannot accommodate metadata to be stored, it may be chained into the stream of metadata objects 241 and a new object may be allocated. When a content object is full or cannot accommodate content to be stored, it may be stored as shown by content objects 242 and a new content object may be allocated and designated as the current object. For the sake of clarity, the current metadata object and current content object are not shown in Fig. 2, however, these objects may be similar to objects 241 and 242 respectively.

Content objects 251 in target disk 250 may be similar to content objects 242 in journal 240, e.g., they may be small size objects, e.g., 16MB objects that together comprise the content of protected storage system 225 which is not included in journal 240. Generally, a copy of some of the content of protected storage system 225 may be included in journal 240 and a copy of the rest of the content of protected storage system 225 may be included in target disk 250. For example, all writes in a configured time window, time or history period may be included in journal 240 and writes or updates that occurred prior to the time window or time period may be included in target disk 250.

Each of objects 251 in target disk 250 may represent, or include, content of a corresponding segment or address apace of protected storage system 225. For example, if the size of content objects 251 is 16MB, then each content object in content objects 251 may represent, or include the content in, a corresponding 16MB segment or address apace on protected storage system 225.

Each one of objects 251 may represent for example 16MB of content of certain offset in protected storage system 225. As with other sizes, ranges, time limits, locations, table values, parameters, etc., other amounts of content may be used. If a 16MB disk region in protected storage system 225 contains no data, e.g., only zeros, then there may be no corresponding 16MB object in objects 251. For instance, starting from offset 0, the first 48MB in a target disk may include, or be composed of, three 16MB objects to represent (or stores the content of) the first 48MB in the protected storage system, one for address space 0-16M, one for 16-32M and one for 32-48M. However, if the protected system has no data stored in the space 16-32M then the target disk may include only two objects for representing (or storing content of) the first 48MB in the protected storage system. Accordingly, according to embodiments of the invention, space required for a replica of protected storage system 225 may be less than the overall size of protected storage system 225.

A system and method according to some embodiments of the invention may apply data in journal 240 to target disk 250. A system and method according to some embodiments of the invention may use journal 240 and target disk 250 to create a disk replica for fail-over, e.g., failing-over of protected storage system 225 to an alternative disk or storage system. A system and method according to some embodiments of the invention may use journal 240 and target disk 250 to create disk replicas for backup purposes.

According to some embodiments of the invention, a region-locator, or a plurality of region-locators, may be generated and used for applying data from journal 240 to target disk 250 and for creating a disk replica, as disclosed herein. A region-locator may be used to determine whether or not data was ever written to an offset in protected storage system 225 at a specified time and, therefore, whether or not data should be written to the corresponding offset in target disk 250. A region-locator may be used to determine, identify or locate, for each offset in protected storage system 225, the last write to the offset before a specified time as represented or included in journal 240. For example, without a region-locator described herein, in order to know or obtain the content that was last written to a particular offset, e.g., offset 0, in protected storage system 225 as stored or represented in journal 240, a unit would need to traverse all metadata objects 241 in journal 240 to find the latest write, if any, to offset 0. Using a region-locator, only once a unit needs to traverse or examine the set of metadata objects 241.

Additionally, the region-locator may be used to map or accumulate writes to content objects 251 in target disk 250. The region-locator may be used to determine, identify or locate, for each address space of a content object 251 all the writes to the corresponding address space in protected storage system 225 as represented or included in journal 240. For example, for a 16MB content object that represents (or store content of) address space 0-16M, region-locator may be used to determine, identify or locate all writes to address space 0-16M in protected storage system 225 as represented or included in journal 240. According to some embodiments, if a plurality of writes has been performed to that same offset within an address space, the last write may be selected.

For example, protection management unit 230 may examine or scan metadata entries in metadata objects 241, determine, for each entry, the time and offset of the relevant write operation in journal 240, e.g., the content object in content objects 241 that stores the data written as well as an offset in the content object. Accordingly, following a single pass over metadata objects 241, a region-locator list or structure may include, or be used to locate, for each address space, all the writes to that address space, and for each offset, the last write to the offset. For example, using a region-locator structure, finding all the latest writes to address space 0-16 will not require any further traversing or examining of metadata in journal 240 since the content objects containing the writes to any offset within address space 0-16 may be readily identified by the region-locator structure. For example, a region-locator structure may include an entry for offsets in an address space and each entry in the region-locator structure may include a pointer or reference to the content object (in content objects 241) that stores the last write to the offset. As described, each one of content objects 242 may include content written to one or more offsets in one or more address spaces. An entry in a region-locator structure may further include an offset in the content object 241 such that the data or content of interest may be readily extracted from the content object.

Table 1 provides a non-limiting example of a region-locator. The first column includes the offsets of the last write operations stored in journal 240, expressed in blocks, and the second column includes in offsets in the journal, expressed in blocks.

**Table 1: An exemplary region-locator.**

| **Key: address space in the protected storage (in blocks)** | **Location in Journal (in blocks)** |
|---|---|
| Blocks 1-10 | Offset 14230 in Journal |
| Blocks 13-15 | Offset 2340 in Journal |
| Blocks 200-250 | Offset 3420 in Journal |
| Blocks 700-950 | Offset 153240 in Journal |

In the example above, blocks 1-10 and 13-15 that were mapped into the region-locator are to be found in the journal at offsets 14230 and 2340, respectively. Blocks 11-12 and 16-199, however, are to be found in target disk 250. Thus they are not listed in the region-locator. Blocks 200-250, and 700-950, are also found in the journal, starting at offsets 3420 and 153240, respectively. For example, block 220 may be found in offset 3440 (3420+20) in the journal and block 150 may be found in offset 150 in target disk 250. The region-locator may be implemented as any data structure that allows efficiently searching based on any suitable key such as Red black tree etc.

The advantage of using a region-locator structure as described may be understood when considering that, typically, a number of writes may be made to the same offset and a number of writes may be made to various offsets that are replicated within a single replicated content object 251. For example, different data or content may be written to offset 1-10 blocks in a possibly large number of write operations over time, or different data or content may be written to blocks at offsets 1-10 and 13-15 blocks, which may be a part of an address space of a single replicated content object 251. Without the region-locator structure, in order to derive or produce a content object that includes the up to date, or latest, content in the single content object 251, all writes to offset 1-10 blocks and to the other offsets of the address apace of the single replicated content object 251 would need to be applied separately to the content object 251. Thus, the process of obtaining, modifying and re-writing would have to be repeated for each write to offsets included within content object 251. In this example, obtaining, modifying and re-writing would have to be repeated two times, one for offset 1-10 blocks and one for offset 13-15 blocks. Using the region-locator structure as described herein, data for producing a content object that includes the latest or up to date content of all offsets of a content object may be obtained with minimal operations. Using the data in the region-locator structure, data may be read from journal content objects 242 that store the content that was written to any offset within the address space of replicated content object 251 using read operations, and written to the content object using a single write operation. Thus, a single update of the replicated content object 251 with all the up to date content that was written to any offset within the address space of content object 251, may be all that is required. A single update of a content object 251 requires obtaining, modifying and re-writing content object 251 into the object-based storage only once. This saves repeating the process of obtaining, modifying and re-writing for each write within content object 251.

Referring now to both Fig. 1 and Fig. 2, where applicable, change detection unit 220, protection management unit 230, backup server 180 and other components and units described herein, may be similar to, or may include components of, device 700 described herein and depicted in Fig. 7. For example, change detection unit 220, protection management unit 230 and backup server 180 may be, or may include, a controller 705, memory 720 and executable code 725 (e.g., backup application 182). In some embodiments, units shown in Figs. 1, 2 and elsewhere may be tasks or applications executed by controller 705.

A system and method according to some embodiments of the invention may apply or transfer data from journal 240 to target disk 250, or from journal 110 to target disk 120. For example, after one or more metadata entries related to a last write to one or more offsets of an address space of a content object 251 in a protected storage system are identified or detected, the associated content entries that include data written to the one or more offsets may be identified (e.g., using a reference in the metadata entries as described) and data in the content entries may be used to create and provide a replica of data stored on the protected storage system from before the time window. A replica may be produced based on any criteria. For example, writes to a specific offset or writes during a specific time period may be identified based on information in metadata entries, relevant content entries may then be identified (e.g., using references in metadata entries) and the relevant content entries in the relevant content objects may then be used to create a replica of data in the protected storage system.

According to some embodiments of the invention, applying or transferring data from journal 240, 110 to target disk 250, 120, respectively, may be performed automatically by a system (e.g., by protection management unit 230) to free data from journal 240, 110 such that journal 240, 110 is maintained at a reasonable size, or in order to maintain in journal 240, 110 data for a required history or time window or time period. For example, if a protected system (e.g., a disk) is configured for a one-hour history, a system according to some embodiments of the invention may constantly or continuously store or keep the writes in the journal 240 or 110 to be the writes in the last hour by applying older data to target disk 250 or 120, e.g., by transferring data in content objects 242 to content objects 251 in target disk 250 and removing metadata objects 241 that are no longer required from the stream of metadata objects in journal 240. In some embodiments, a system of the invention may apply older data to target disk 250 or 120 periodically, e.g., every predetermined time period. The time period for applying older data to target disk 250, 120 may be shorter than the journal time window. For example, journal 240, 110 may be configured to keep information from up to a journal time window of 24 hours, and applying older data to target disk 250, 120 may be performed every hour. Thus, every hour, information that was written to protected system 225 more than 24 hours ago may be written to or applied to target disk 250, 120.

Journal 240, 110 may be periodically purged, e.g., every 1, 10, 12 or 24 hours. According to some embodiments of the present invention, writing or applying content in journal 240 that is older than a specified time window (e.g., 10, 24, 48 hours, or any other time duration), to target disk 250, 120 may include creating a region-locator structure for the earliest write entries, e.g., the earliest 10, 12 or 24 hours, in journal 240 and then replacing the 16MB objects in the target disk data with the new content from journal 240 according to the region locator. As described, using a region locator may ensure that each content objects 251 in target disk 250 is written at most one time.

Continuous data protection may enable a fail-over of a protected storage system to a target site. In order to achieve this, a system and method according to some embodiments of the invention may produce a replica or copy of the protected storage system, wherein the replica is for a specified time. For example, a user may want to be provided with a replica of protected storage system 225 as it was 2 hours ago, or three days ago, or the user may want a replica that reflects the latest possible or available state of protected storage system 225. As described, using a region locator, a system and method according to some embodiments of the invention may identify and find the content written to protected storage system 225 based on a time value. A time value may be, or may include, a specification of a time period or a history period. For example, a time value may include a start time and an end time of a time period thus defining a time or history window. In other cases, a time value may be an indication of a time, e.g., an hour, minute and second of a specific day. Using a time value, an embodiment of the invention may identify writes to a protected system. For example, using a time value that specifies a time window or period, all metadata entries related to writes that occurred before or during the time window may be identified as described herein. In another case, using a time value that only indicates a specific time, all metadata entries related to writes that occurred before the indicated time (or after the indicated time) may be identified. As described, using the identified metadata entries, the associated content entries may be identified or located. Accordingly, a replica of data of a protected system may be created based on any time related criteria using a time value as described.

For example, the region locator structure may be generated such that it includes references to content entries 114 and/or to content object and offsets therein such that a replica of protected storage system 225 as it was 2 hours ago, or three days ago may be generated. Once content entries 114 and/or content objects that store data for all offsets in protected storage system 225 are obtained or referenced, protection management unit 230 may copy content entries to target disk 120, 250. Assuming protected storage system 225 is a disk, a replica of protected storage system 225 may be created by applying data from journal 240, 110 to target disk 250, 120 as described and writing data of target disk 250, 120 to a disk, e.g., a disk connected to a server or a disk in a VM pointed to by a user.

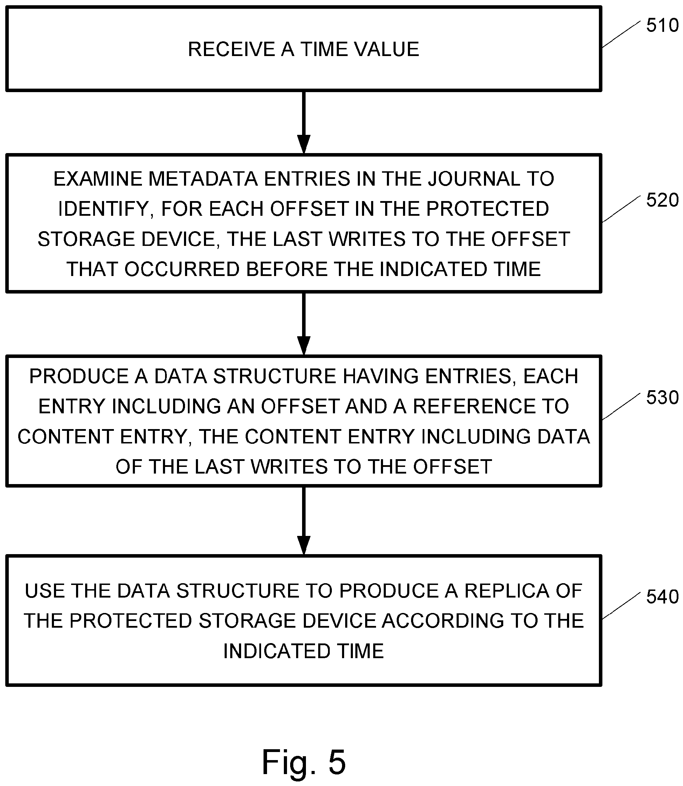

A system and method according to some embodiments of the invention may generate backups from protected data in recovery system 150, 270. For example, a backup application 182 running on, for example, backup server 180, may initiate generations of backups, e.g., by requesting protection management unit 230 to generate a backup from a specified time point. A backup or a backup instance may include a replica of protected storage system 225 generated by recovery system 150, 270, as disclosed herein, for example with reference to Fig. 5. A backup may further include configuration data of protected storage system 225 as disclosed herein. Backups of protected storage system 225 may be generated periodically, for example, every hour, every day, etc. The backups may be stored on a storage device, e.g., storage device 730 depicted in Fig. 7.

The task of backup generation may be divided between backup application 182, and protection management unit 230 according to any applicable manner. Either one of backup application 182 and protection management unit 230 may generate the region locator, and either one of backup application 182 and protection management unit 230 may use the region locator to request data from either journal 110, 240 or target disk 120, 250. Additionally, either one of backup application 182 and protection management unit 230 may combine the obtained data to produce a replica of protected storage system 225 at the specified time point. For example, backup application 182 may generate a region locator and copy data from content entries in journal 110, 240 for the offsets in the list of the region locator and copy data from target disk for other offsets 120, 250. Additionally, it should be noted that some embodiments of the present invention are not limited to generating the replica using the region locator. While combining the data from the journal and target disk using the region locator is very efficient, other methods may be used, including, for example, the trivial and less efficient method of copying the target disk in its entirety, and overwriting or updating this copy with the data in the journal until the specified time point.

In some embodiments, parallelism may be achieved by dividing the memory space of protected storage system 225 into sections and using one or more backup applications 182, each to generate backup of one or more sections. As noted before, protected storage system 225 may include a VM with a plurality of disks. In some embodiments, each section may include one or more of these disks. Backup application 182 may initiate generation of backups for some or all of these sections in parallel. Hence, a plurality of partial replicas may be generated, e.g., by protection management unit 230 or backup application 182. A single and complete backup of protected storage system 225 may be generated from the plurality of partial replicas by combining the partial replicas. A plurality of partial replicas may be created by generating a region locator for each section and repeating the process of generating a replica as disclosed herein for each section. In some embodiments, a plurality of backup applications 182 may reside on a plurality of backup servers 180, e.g., on different VMs and/or hosts, thus utilizing more resources to speed-up the backup process. In some embodiments, a plurality of backup applications 182 may reside on a single or on a plurality of backup servers 180 where each backup application 182 may generate backups of a single protected storage system 225, e.g., a single VM.

A system and method according to some embodiments of the invention may store configuration data of protected storage system 225 alongside the replica of protected storage system 225. In some embodiments, protected storage system 225 may be a VM. VMs may change their configuration with time, to better fit the system requirements. For example, random access memory (RAM) size, CPU configuration, network configuration, etc. may all change in an operating VM. Restoring the VM may require obtaining the configuration of the VM together with the data or content stored on the VM. In some embodiments, configuration of protected storage system 225 may be obtained directly from protected storage system 225. For example, backup application 182 may initiate generating a current replica of protected storage system 225 and request the current configuration data of protected storage system 225 directly from protected storage system 225. Care should be given for time synchronization since the VM configuration data should be from the same time of the replica. Configuration data may include RAM size, CPU configuration, network configuration, and other parameters of the VM that may enable duplication of the VM.

In some embodiments, the VM configuration data may be sent periodically from protected storage system 225 to recovery system 150, 270 and may be stored by recovery system 150, 270, similarly to other content of protected storage system 225. For example, VM configuration data from before the time window may be saved in a known offset in target disk 120, 250 and changes to the configuration data may be stored in journal 110, 240 in a content entry 114 and a corresponding metadata entry 112, or in a content entry stored in a content object 242 and a corresponding metadata entry stores in a metadata object 241. For example, if a history of 24 hours is to be stored or kept for protected storage system 225, then VM configuration data related to the past or last 24 hours may be stored in journal 110, 240 and VM configuration data from 24 hours ago may be stored in target disk 120, 250. The stored VM configuration data may be time stamped so that the timing of the VM configuration data is known. Thus, the VM configuration data may be replicated together with the content replication. Storing the VM configuration data in recovery system 150, 270 may enable generating backups that include VM configuration data, by accessing recovery system 150, 260 only, with no interface between backup application 182 and protected storage system 225. Thus, protected storage system 225 may be totally isolated from backup application 182 and the backup generation process. According to some embodiments, the configuration data of the VM may be sent to recovery system 150, 270 each time the configuration data changes. The configuration data may not be stored in the journal, but may be stored separately with or without a timestamp. In some embodiments, each time a new configuration is sent, the new configuration data overwrites the previous one. Hence, recovery system only has the most updated configuration. 150, 270. In some embodiments, recovery system 150, 270 may store a set of configuration files, so that recovery system 150, 270 has a history of configuration data, e.g., corresponding to the data time window stored in journal 110, 240.

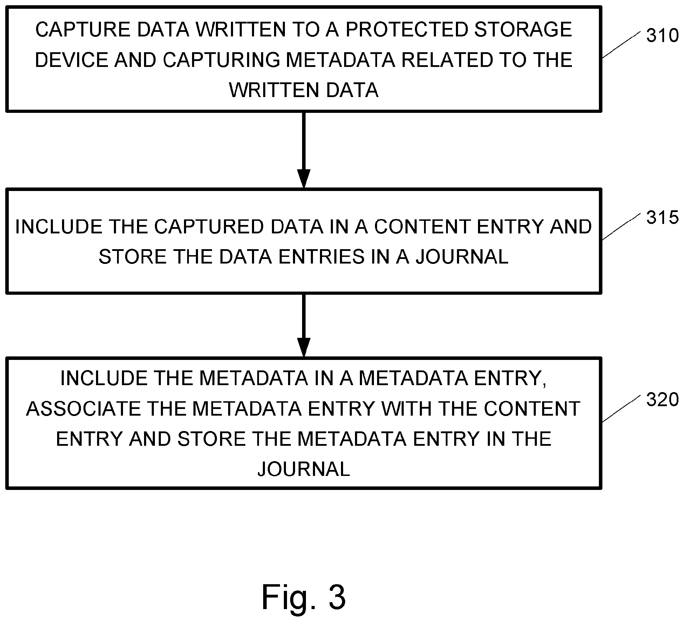

Reference is now made to Fig. 3 showing a flowchart of a method for journaling in a recovery system according to an embodiment of the present invention. As shown by block 310, data written to a protected storage system (e.g., protected storage system 225) may be captured and metadata related to the written data may be captured. For example, changes in the protected storage system, may be detected, for example by intercepting write operations, and data written to, or stored on, the protected storage system may be captured. As described, metadata related to a write of data, may be captured, generated or identified e.g., an offset to which data is written on the protected storage system, a time of the write operation and the length or amount of data written may captured or determined.

As shown by block 315, the captured data may be included or stored in a content entry in a journal, or in journal content object in an object-based journal (such as object-based journal 240). If the recovery system is object-based (e.g., recovery system 270), the content entry is stored in one or more fixed-size content objects and the content objects may be stored in the journal using object-based storage technique. For example, a change detection unit may detect changes in the protected storage system, for example by intercepting writes to a protected storage system (e.g., writes to a physical disk or writes to a virtual disk in a VM) in a first site and may send captured data and related metadata to a protection management unit (such as protection management unit 230) in a second, possibly remote or separate, site. As described herein, the protection management unit may insert the captured data, as a content entry, into fixed size, small content objects and store the content objects in a journal in an object-based storage system using object-based storage technique. For example, a commercial object-based storage system or platform (e.g., S3 provided by Amazon) may be used to store content objects in a journal. The flow of adding protected disk writes to the journal may include accumulating writes data or content entries in memory, for example, in e.g., 0.5MB, 1MB or 2MB memory chunks or segments, and storing the memory chunks or segments as content objects in a journal in an object-based storage system using object-based storage technique.

According to some embodiments of the invention, information related to writing data to a protected system may be stored or recorded in a recovery system. The information stored may include the actual data written to the protected system (e.g., in content entries as shown by block 315 and described herein) and metadata related to the writing or storing of the actual data. For example, metadata (e.g., time, offset and the like) may be stored in metadata entries and/or in metadata objects as shown by block 320.

As shown by block 320, the metadata may be included or stored in metadata entries. If the recovery system is object based (e.g., recovery system 270), the metadata entries may be stored in one or more fixed-size metadata objects and the metadata objects may be stored in an object-based journal using object-based storage technique. The metadata entries may be associated with the content entries. Object-based storage techniques may be used to store the metadata object in the journal. Fixed-size objects used with object-based storage techniques are known in the art. Fixed-size objects may be a memory construct or may be objects or constructs stored on a disk or other storage media. For example, a set of fixed-size objects may be a set of objects (e.g., files or memory segments) where each of the objects has the same size. For example, as opposed to files that may be of any size, fixed-size objects are objects that, regardless of the amount data they contain, have a fixed size. For example, the size of a fixed size object stored in a disk or other storage system may be 16MB even if the objects only contain 2MB of data. Fixed-size objects are used by object based systems as known in the art. Using fixed size objects relieves a system from tracking or otherwise dealing with the size of objects being stored, read or otherwise manipulated. A system using fixed-size objects (e.g., object based systems known in the art) may provide basic, simple (also referred to in the art as atomic) operations such as read, write or delete objects without dealing with the size of the objects. In contrast, variable size objects (e.g., files known in the art) may have variable size, e.g., a file may be extended in size as more data is added to the file.

For example, the protection management unit may include metadata in metadata objects in the journal where the metadata objects are objects of fixed, small size, e.g., objects that are each 0.5MB, 1MB or 2MB in size, or (as with other parameters discussed herein) other sizes. The protection management unit may include a copy of actual data written to the protected storage system in fixed-size content objects, e.g., objects that are each 16MB in size.

Metadata entries, such as metadata entries 112 or metadata entries in metadata object 241 may be associated with content entries or with content entries in content objects 242, such that each metadata entry for a write operation is associated with the actual data or content entry that was stored on the protected storage as part of the write operation. For example, pointers as known in the art may be used to associate or link a metadata entry with a content entry. In other cases, a reference (e.g., a name or address) of content entry may be included in metadata entries thus associating metadata entries with content entries, enabling identifying content entries associated with a metadata entry based on a reference included in the metadata entry. In yet other cases, a list may be used whereby, for each metadata entry, an entry in the list indicates the content entry associated with the metadata entry.

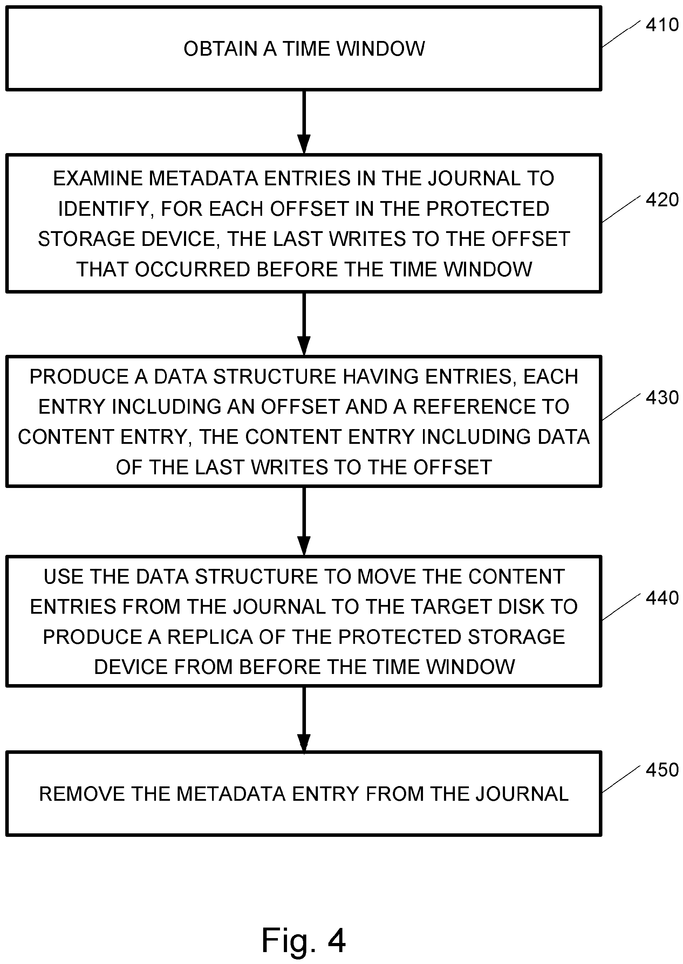

Reference is now made to Fig. 4, which shows a flowchart of a method for applying a journal to a target disk in a recovery system according to some embodiments of the present invention. Applying data from a journal, such as journal 110, 240 to a target disk such as target disk 120, 250 may be performed continuously or periodically, according to the system design, for example, every 10, 12 or 24 hours, or another time period.

As shown by block 410, a time window, history parameter or time period value may be obtained. According to some embodiments, the time window may be one of the system parameters that may be determined or entered, for example, by a system operator. According to some embodiments of the invention, the journal may be configured to store all writes to a protected system performed during a recent time period, defined by the time window. For example, the time window may indicate that the journal is to maintain data for the past 24 hours. According to some embodiments, the time window may be used to detect, in the journal, a metadata entry related to a write performed before the time window. Since metadata entries may be chronologically arranged, e.g., in the form of a stream according to time, detecting metadata entries related to writes performed before the time window may include traversing the stream of metadata entries and identifying the last write that occurred before the time window. For example, if a time window of 24 hours is defined than the last write to a protected storage system (e.g., protected storage device 225) that is outside the time window may be one that occurred 24 hours and two seconds ago. Once the last write before the time or history window is identified, all writes that occurred before that write may be considered as old or outside the time or history window.

As shown by block 420, metadata entries in the journal may be examined to identify, for offsets in the protected storage device, the last write to the offset that occurred before the time window. As described, metadata entries in the journal may include an offset in the protected storage system that may serve as an address of a content entry storing the related write. All metadata entries in the journal may be scanned and the last write to the offset for each offset that data was written to before the time window may be identified.

For example, upon finding a first metadata entry related to a write to offset 0 that occurred before the indicated time, the protected storage system may record or mark the first metadata entry as the last write to the offset that occurred before the time window. If, continuing to examine metadata entries in the journal, a second metadata entry related to a more recent write to offset 0 that also occurred before the time window is found, the second entry may be recorded or marked as the last write to offset 0 that occurred before the time window. Accordingly, following a single pass over all metadata entries from before that time window, the metadata entry related to the most recent or last write to offset 0 that occurred before the time window may be found. In a similar way, the last write to each offset in a protected storage system that occurred before the time window may be found in a single pass over metadata in the journal. Accordingly, by traversing once the stream of metadata entries in the journal, a system and method according to some embodiments of the invention may produce a list or structure that includes, for offsets or addresses in the protected storage system, the last write of data that took place before or up to the specified or indicated time window.

As shown by block 430, a data structure, also referred to herein as the region-locator, having a list of entries may be produced, each entry including an offset and a reference to a content entry (e.g., content entry 114 or a content entry in a content object 242), the content entry including data of the last write to the offset. For example, following a single pass over a set of metadata entries in journal 110, 240, the relevant metadata entries may be identified. As described, metadata entries may include a reference or pointer to the relevant content entries. Accordingly, provided with metadata entries as described, a region-locator structure as described herein that may include, a list of offsets and for each offset in the list, a reference to the content entries containing the last content or data that was written to the offset before the specified or indicated time, may be generated.

Additionally, and mainly for but not limited to an object based recovery system the region-locator may be used to map or accumulate writes to specific content objects in the target disk. The region-locator may indicate, for each address space of a content object all last writes to the corresponding address space in the protected storage system from before the time window, as represented or included in the journal. For example, following a single pass over a set of metadata entries in the metadata objects, the relevant metadata entries of each address space of each content object from before the time window may be identified. For example, for a 16MB content object that represents (or store content of) address space 0-16M, the region-locator may provide indication of all writes to address space 0-16M in the protected storage system from before the time window as represented or included in the journal. If a plurality of writes has been performed to the same offset within an address space before the time window, the last write will be selected.

As shown by block 440, the region-locator may be used to move content entries from the journal to the target disk to produce a replica of the protected storage system according to the time window. For example, if an embodiment of the system initiates applying of writes from before the time window to the target disk, then the region-locator as described herein may be generated such that it includes metadata entries related to the most recent writes to the protected storage system that occurred before the time window. Using metadata entries listed in the region-locator, corresponding content entries may be copied or applied to the target disk.

In some embodiments, mainly but not limited to object based recovery systems, the region-locator may include indications to the most recent writes to each address space of each content object from before the time window. Thus, the region-locator may be used to determine, identify or locate the most recent writes to each address space before the time window corresponding to each content object. Using the metadata entries in the region-locator, the content entries in the content objects of each address space may be copied or applied to a corresponding content object in the target disk, possibly updating each content object 251 no more than once.

As shown by block 450, content entries and metadata entries that were applied to the target disk may be removed from the journal. For example, after the actual content written in an operation and included in a content entry is moved or copied to the target disk, the content entry and the related metadata entry may be deleted or removed from the journal, e.g., by removing the content entry from content objects and the metadata entry from metadata objects. Accordingly, a journal may be maintained such that it includes data and metadata related to a configured time window.

Reference is now made to Fig. 5, which shows a flowchart of a method for creating a disk replica from a journal and a target disk in a recovery system, e.g., recovery systems 150, 270, according to embodiments of the present invention.

As shown by block 510, a time value or time stamp may be received. For example, a system and method according to some embodiments of the invention may receive a time value that indicates a time and date for which a replica of a protected storage system (e.g., protected storage system 225) is to be provided. For example, a user or a backup application, such as backup application 182 may want a replica of the protected storage system as it was five hours ago, two days ago, or to be provided the most recent or current replica of the protected storage system.

As shown by block 520, metadata entries in the journal may be examined to identify, for each offset in the protected storage system, the last write to the offset that occurred before the indicated time. As described, metadata entries in journal may include an offset that may serve as an address of the related content entry of the write operation. Metadata entries in journal may be scanned and, for each offset, the last write to the offset before the indicated time may be identified.

For example, upon finding a first metadata entry related to a write to offset 0 that occurred before the indicated time, the first metadata entry may be recorded or marked as the last write to the offset that occurred before the indicated time. If, continuing to examine metadata entries in the journal, a second metadata entry related to a more recent write to offset 0 that also occurred before the indicated time is found, the second entry may be recorded as the last write to offset 0 that occurred before the indicated time. Accordingly, following a single pass over all metadata entries, the metadata entry related to the most recent or last write to offset 0 that occurred before an indicated time or date may be found. In a similar way, the last write to each offset in a protected storage system that occurred before the indicated time may be found in a single pass over metadata in the journal. Accordingly, by traversing once the stream of metadata entries in the journal, a system and method according to embodiments of the invention may produce a list or structure that includes, for each offset or address in protected storage system, the last write of data that took place before or up to a specified or indicated time or date.

As shown by block 530, a region-locator having a list of entries may be produced, each entry including an offset and a reference to a content entry including data of the last write to the offset before the indicated time. For example, following a single pass over a set of metadata entries, the relevant metadata entries may be identified. As described, metadata entries may include a reference or pointer to the relevant content entries. Accordingly, provided with metadata entries as described, a region locator structure as described herein may be generated. The region locator may include a list of offsets and for each offset in the list, a reference to the content entries containing the last content or data that was written to the offset before the specified or indicated time.

As shown by block 540, the data structure may be used to produce a replica 260 of the protected storage device according to the time value or time stamp. For example, if a user or backup application requests a replica of a protected storage system as it was five hours ago, then the region-locator as described herein may be generated such that it includes metadata entries related to the most recent writes to the protected storage system that occurred up to, but not later than, five hours ago.

According to some embodiments of the present invention, a replica of the protected storage device according to the indicated time may be generated substantially without altering or updating the target disk. For example, the replica may be generated by using the entries in the region-locator for copying content from either the target disk or the journal, as indicated in the region-locator, e.g., by copying data from content entries in journal for the offsets included in the list of the region locator, and copying data from the target disk for other offsets. For example, the replica may be created as a single, possibly very large, object in the object storage, or elsewhere. For example, the replica may be created on block storage where it may be mounted as an actual disk, e.g., Elastic Block Store (EBS^{®}) in AMAZON.

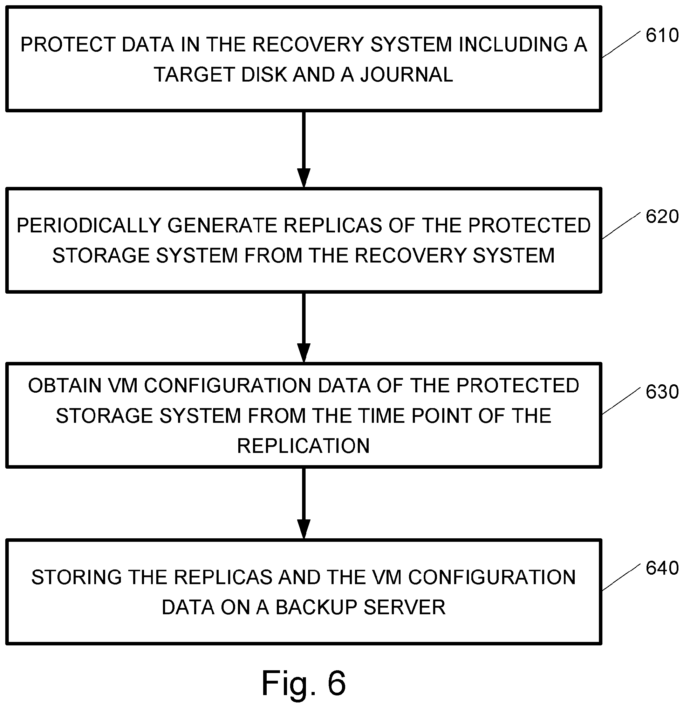

Reference is now made to Fig. 6, which shows a flowchart of a method for generating backups from protected data in a recovery system, according to some embodiments of the present invention.

As shown by block 610, data or content of a protected storage system, such as system 225 may be protected in a recovery system, such as recovery system 270 or 150. In block 620 backups of the protected storage system are generated. According to some embodiments of the present invention, the task of backup generation may be divided between, for example, a backup application, and a protection management unit according to any applicable manner. Either one of the backup application and the protection management unit may generate the region locator, and either one of the backup application and the protection management unit may use the region locator to request data from either the journal or the target disk. Additionally, either one of the backup application and the protection management unit may combine the obtained data to produce a replica of the protected storage system at the specified time point. For example, a backup application may initiate generations of backups, e.g., by requesting protection management unit 230 to generate a replica from a specified time point. A backup may include a replica of the protected storage system generated by the recovery system, as disclosed herein, for example with reference to Fig. 5. According to some embodiments, backup application may generate a region locator and copy data from content entries in the journal for the offsets in the list of the region locator and copy data from the target disk for other offsets. Backups of the protected storage system may be generated periodically, for example, every hour, every day, etc. As noted, some embodiments of the present invention are not limited to generating the replica using the region locator. While combining the data from the journal and target disk using the region locator is very efficient, other methods may be used, including, for example, the trivial and less efficient method of copying the target disk in its entirety, and overwriting or updating this copy with the data in the journal until the specified time point.

According to some embodiments of the present invention, backup generation may be parallelized. For example, the memory space of the protected storage system may be divided into a plurality of sections. As noted before, the protected storage system may include a VM with a plurality of disks. In some embodiments, each section may include one or more of these disks. Backups of some or all of these sections may be generated in parallel. Hence, a plurality of partial replicas may be generated. A single and complete backup of the protected storage system may be generated from the plurality of partial replicas by combining the partial replicas. A plurality of partial replicas may be created by generating a region locator for each section and repeating the process of generating a replica as disclosed herein for each section.

In block 630, the configuration of the protected storage system may be obtained. In some embodiments, the protected storage system may be a VM. As known in the art, VMs may change their configuration with time, to better fit the system requirements. For example, RAM size, CPU configuration, network configuration, etc. may all change with time in an operating VM. Restoring the VM may require obtaining the configuration of the VM together with the data or content stored on the VM. In some embodiments, configuration of the protected storage system at the time of the replication may be obtained directly from the protected storage system. Care should be given for time synchronization since the VM configuration data should be from the same time of the replication.

In some embodiments, the VM configuration data may be sent periodically from the protected storage system to the recovery system and stored by the recovery system. The stored VM configuration data may be time stamped so the timing of the VM configuration data is known. Thus, the VM configuration data may be replicated together with the content replication from the recovery system.

In block 640, the replicas may be stored on a storage device, e.g., as a backup instance corresponding to a specified time point. In some embodiments, the backups may include, or may be stored together with the VM configuration data. As noted before, the protected storage system may include a VM with a plurality of disks. A backup of the protected storage system may include a single file containing the data from all disks or sections and the VM's configuration. In some embodiments, the backup of the protected storage system may include a plurality of files, e.g., a file containing VM configuration data and a data file for each section or disk containing the content of the respective section or disk. Splitting the replica to several files enables the user to easily access the VM configuration and the content of each section or disk. This also enables a partial restore of only one or some disks of the protected storage system.

In some embodiments, the replicas of the protected storage system may be stored in a raw format, e.g., unaltered and uncompressed, to enable easy and fast restore. In some embodiments, content of the protected storage system may be compressed before storing using any compression method to save disk space. When stored in a compressed format, storing and restoring processes may take more time and consume more CPU resources.

Reference is made to Fig. 7, showing a high level block diagram of an exemplary computing device according to some embodiments of the present invention. Computing device 700 may include a controller 705 that may be, for example, a computer central processing unit processor (CPU), a chip or any suitable computing or computational device, an operating system 715, a memory 720, executable code 725, storage or storage device 730, input devices 735 and output devices 740. Controller 705 may be configured to carry out methods described herein, and/or to execute or act as the various modules, units, etc., for example by executing code or software. More than one computing device 700 may be included, and one or more computing devices 700 may act as the various components, for example the components shown in Figs. 1, 2. For example, protection management unit 230 and backup server 180 described herein may be, or may include components of, computing device 700. For example, by executing executable code 725 stored in memory 720, controller 705 may be configured to carry out a method of protecting data of a virtual machine as described herein. Controller 705 may be configured to generate a region-locator structure and use the region-locator structure to provide a replica of a protected storage system as described herein. Controller 705 may be configured to generate backups of a protected storage system from a disaster recovery system as described herein, and store the backups on storage device 730.

Operating system 715 may be or may include any code segment (e.g., one similar to executable code 725 described herein) designed and/or configured to perform tasks involving coordination, scheduling, arbitration, supervising, controlling or otherwise managing operation of computing device 700, for example, scheduling execution of software programs or enabling software programs or other modules or units to communicate. Operating system 715 may be a commercial operating system.

Memory 720 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 720 may be or may include a plurality of, possibly different memory units. Memory 720 may be a computer or processor non-transitory readable medium, or a computer non-transitory storage medium, e.g., a RAM.

Executable code 725 may be any executable code, e.g., an application, a program, a process, task or script. Executable code 725 may be executed by controller 705 possibly under control of operating system 715. For example, executable code 725 may be an application that generates backups of a storage system from a disaster recovery system as further described herein. Although, for the sake of clarity, a single item of executable code 725 is shown in Fig. 7, a system according to embodiments of the invention may include a plurality of executable code segments similar to executable code 725 that may be loaded into memory 720 and cause controller 705 to carry out methods described herein. For example, units or modules described herein may be, or may include, controller 705 and executable code 725.

Storage device 730 may be any applicable storage system, e.g., a disk or a virtual disk used by a VM. Storage 730 may be or may include, for example, a hard disk drive, a floppy disk drive, a Compact Disk (CD) drive, a CD-Recordable (CD-R) drive, a Blu-ray disk (BD), a universal serial bus (USB) device or other suitable removable and/or fixed storage unit. Content may be stored in storage 730 and may be loaded from storage 730 into memory 720 where it may be processed by controller 705. In some embodiments, storage device 730 may be used for storing backups of a protected storage system. In some embodiments, some of the components shown in Fig. 7 may be omitted. For example, memory 720 may be a non-volatile memory having the storage capacity of storage 730. Accordingly, although shown as a separate component, storage 730 may be embedded or included in memory 720.

Input devices 735 may be or may include a mouse, a keyboard, a touch screen or pad or any suitable input device. It will be recognized that any suitable number of input devices may be operatively connected to computing device 700 as shown by block 735. Output devices 740 may include one or more displays or monitors, speakers and/or any other suitable output devices. It will be recognized that any suitable number of output devices may be operatively connected to computing device 700 as shown by block 740. Any applicable input/output (I/O) devices may be connected to computing device 700 as shown by input devices 735 and output devices 740. For example, a wired or wireless network interface card (NIC), a printer, a universal serial bus (USB) device or external hard drive may be included in input devices 735 and/or output devices 740.

Some embodiments of the invention may include a transitory or non-transitory computer readable medium, or an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, an article may include a storage medium such as memory 720, computer-executable instructions such as executable code 725 and a controller such as controller 705.

The storage medium may include, but is not limited to, any type of disk including, semiconductor devices such as read-only memories (ROMs) and/or random access memories (RAMs), flash memories, electrically erasable programmable read-only memories (EEPROMs) or any type of media suitable for storing electronic instructions, including programmable storage devices. For example, in some embodiments, memory 720 is a non-transitory machine-readable medium.

A system according to some embodiments of the invention may include components such as, but not limited to, a plurality of central processing units (CPU) or any other suitable multi-purpose or specific processors or controllers (e.g., controllers similar to controller 105), a plurality of input units, a plurality of output units, a plurality of memory units, and a plurality of storage units. A system according to some embodiments of the invention may additionally include other suitable hardware components and/or software components. In some embodiments, a system may include or may be, for example, a personal computer, a desktop computer, a laptop computer, a workstation, a server computer, a network device, or any other suitable computing device. For example, a system according to some embodiments of the invention as described herein may include one or more devices such as computing device 700.

Although write operations are mainly discussed herein, it will be understood that any modification to data in a protected system may be detected by a system and method according to the invention as described with respect to write operations. For example, operations such as modifying or deleting data in a protected system may be detected. Information stored in a journal as described may be related to any operation. For example, a content entry in a journal may include information related to an addition, modification or deletion of data in the protected system. For example, a copy or a portion of deleted data or modified data may be stored in the journal and may be associated with metadata as described herein with respect to write operations.

A CBT is used to mark or identify storage units that were modified in a protected storage system. For example, a CBT identifies storage units that were deleted, changed or added, e.g., by setting a bit in a bitmap to one ("1"). For example, a CBT is used to identify blocks or sectors in a disk that were modified after a last full or incremental backup was made. A CBT is used to mark, track and/or record the changed blocks since the last backup point. For example, to mark or record a storage unit that was modified in a protected system, a bit representing, or associated with, the storage unit may be set to one ("1") thus marking or recording that the storage unit was modified. For example, to mark or record that block number 5 in a protected system was modified, bit number 5 in a bitmap may be set.

Advantages of storing or maintaining and using a CBT according to embodiments of the invention may include an efficient way of marking storage units (e.g., blocks) in a protected system that were modified. Advantages of storing and using a CBT according to embodiments of the invention may include an efficient and fast way of identifying storage units (e.g., blocks) in a protected system that were modified. For example, some embodiments may use a CBT to determine which of the storage units (e.g., blocks) in a protected system were modified since an indicated or selected time or during a specific time window, and may further generate a region-locator based on the identified storage units or blocks.

A region-locator as described herein may an object (e.g., a file or a segment in a memory) that includes a list of offsets and, for each offset in the list, a region-locator object may include a reference to the last data that was written to the offset. For example, the last (or most up to date) data that was written to an offset in the list may be stored in a content entry in the journal and a region-locator object may include a reference to the content entry. The last (or most recent) data that was written to an offset in the list may be stored on any storage system or device operatively connected a recovery system, e.g. a target disk as described herein, and a region-locator object may include a reference to the data in the storage system or device, e.g., a reference included in a region-locator may be an object name in an object based storage system.

A region-locator object may be created based on one or more CBT objects. For example, using a CBT as described, an embodiment of the invention may readily obtain a list of blocks of data that were modified since, or up to, a specified time, e.g., by examining bits in a bitmap. For example, data storage units that were modified may be marked in a CBT, e.g., by setting their respective bits in a bitmap to one ("1"). As known in the art, examining a bitmap (e.g., determining which bits are set to one and which are set to zero) is a fast and low-cost operation. Accordingly, using a CBT as described herein, an embodiment may quickly and efficiently obtain a list of data storage units (e.g., blocks, sectors, or ranges of addresses) that were modified since a specific time point or during a specific period of time, and may use the list to generate a region-locator by including, in the region-locator, references to data storage units marked as modified in a CBT.

Once the blocks or offsets of data that was modified in the protected system are known, creating a partial, incremental or full backup may be done by embodiments of the invention using a reference to a content entry that includes the relevant data, examining metadata entries in a journal and other information and operations as described herein.

According to some embodiments, a bit map (or bitmap) as known in the art may be used. Generally, a bitmap is a representation in which each item (e.g., a storage unit such as a block, a sector in a hard disk or a range of addresses in a disk) corresponds to one bit of information. A bit (a portmanteau of "binary digit") as known in the art is a basic unit of information that can assume one of two values, "0" and "1".

A system and method according to embodiments of the invention may store, in a memory (e.g., in memory 720 in computing device 700), a CBT object that may be, or may include, a plurality of bits, or other elements, representing a plurality of storage units in a protected storage system. For example, each block of data in a protected storage system may be represented by a bit in a CBT. In some embodiments, to create and/or store a CBT for a protected system, the number of storage units in the protected system may be determined and a segment in a memory (e.g., a segment in memory 720) that includes a bit for each storage unit in the protected system may be allocated or initialized. For example, if the protected system is a hard disk that has 1 terabytes of storage units then a bitmap in a CBT may include at least 1 terabytes bits. As described, storage units may be defined based on a configuration, for example, a storage unit may be a sector in a hard disk, a range of addresses and so on.

Upon (e.g., in response to, immediately after, or some time after) detecting a modification of data in a storage unit in a protected storage system, a system and method according to embodiments of the invention may modify, in the CBT object, an element that represents the storage unit to indicate that the storage unit was modified. For example, initially, all bits in a CBT may be set to zero ("0"), upon detecting that storage unit 17 was modified, bit number 17 in the CBT may be set to one ("1") thus indicating that storage unit 17 was modified. A modification of a storage unit may be any modification of data in the storage unit, e.g., deletion of data, changing a value, adding a value or completely replacing data in the storage unit.

A CBT object stored in a memory (or otherwise maintained) as described herein may be kept in a volatile memory, e.g., a RAM as described. Some of the advantages of storing or maintaining a CBT object in RAM may be the speed and efficiency with which a CBT in RAM may be updated. A CBT stored or maintained in a memory may be referred to herein as a memory CBT, volatile CBT or transient CBT.

Using a memory CBT as described, embodiments of the invention may track and record changes of data in a protected system without the need to perform a write operation to a disk for each write to the protected system. For example, in order to maintain a CBT, rather than updating a CBT on a disk every time a modification of data in a protected system is detected, embodiments of the invention may only update a CBT in a memory. As known in the art, updating or writing data in a memory (e.g., a RAM) is much faster, more efficient and far less costly than writing or updating data on a disk. For example, in a bitmap, bits representing blocks that were modified since the last full or partial or incremental backup may be set to one ("1") and bits representing blocks that were not modified since the last backup may be set to one ("0") as described. Accordingly, embodiments of the invention may readily use a CBT to identify or determine blocks that were modified since a last backup.

Another type of a CBT object maintained and used by embodiments of the invention may be a stored CBT, also referred to herein as a persistent CBT. For example, an embodiment of the invention may produce a stored or persistent CBT by storing, e.g., in a disk and/or using object based technique, data extracted from a memory (or transient or volatile) CBT. For example, an embodiment of the invention may produce a stored or persistent CBT by storing a copy of a memory CBT object in a storage system to produce a stored CBT object

As described herein, a journal may include data related to a defined or configured history (e.g., a journal may contain a copy of all writes to the protected disk that were done in the last hour). As further described, data related to a time outside the history may be removed from the journal.

According to some embodiments of the invention, upon removing, from the journal, data related to a modification of a storage unit in a protected storage system, if the stored (or persistent) CBT object does not include an indication that the storage unit was modified, a system and method may replace the stored CBT by a copy of the memory CBT object to produce an updated stored CBT object.

For example, a system and method may include continuously updating a memory CBT (or a bitmap in a memory such as a RAM) as described and writing the memory CBT (or bitmap) to a disk only when the stored CBT (or last saved bitmap) is about to be older than (or no longer include or reflect) the changes kept in the journal.

For example, assuming the journal history is 4 hours, during the first 4 hours (0 to 4), a memory CBT or bitmap may be updated or maintained as described such that it reflects or includes changes entered to the journal. For example, each write operation to the protected system may cause, according to embodiments of the invention, updating the journal as described and may further cause, according to embodiments of the invention, updating a memory CBT such that blocks (or any storage units) in the protected system that were modified may be easily and quickly identified.

For example, a system or method according to embodiments of the invention may create an incremental backup by storing, on a storage system, a copy of data in a storage unit if the storage unit is marked in the CBT object. For example, a system or method according to embodiments of the invention may examine a CBT to identify blocks that were modified since the last or previous backup and only store data of blocks for which the representing bit in a bitmap is set to one ("1").

Referring to the 4 hours journal history example, when 4 hours have passed, some of the changes may be removed from the journal, e.g., such that the journal is kept small and made to only store data related to the exemplary journal history of 4 hours. For example, data related to the first 10 minutes of the journal history of 4 hours may be removed from the journal. Upon removing data from the journal, embodiments of the invention may create or update a stored CBT. For example, the memory CBT (or data in the memory CBT) representing the first 4 hours is stored on a disk thus producing a stored CBT (that represents the first 4 hours in the current example). Since the stored CBT may now represent 4 hours of journal data, embodiments of the invention may only update the memory CBT during the next 4 hours (e.g., during hours 4 to 8) and need not update the stored CBT during the following four to eight (4-8) hours period.

As described, upon removing, from the journal, data related to a modification of a storage unit in the protected storage system, if the stored CBT object does not include up to date information related to modifications (or writes) that is (or is about to be) removed from the journal, the stored CBT may be updated or replaced (or a new stored CBT may be created) such that data removed from the journal is included in the stored CBT. For example, an indication that a storage unit was modified may be in the form of a bit in a bitmap set to one ("1"). According to embodiments of the invention, if information related to a modification of a storage unit is about to be removed from the journal and the stored CBT does not include an indication that the storage unit was modified (e.g., the relevant bit in the stored CBT is not set to one),

For example, with reference to the 4 hours journal history example, at the end of hour 8, some of the data about to be removed from the journal does not exist in the stored CBT (that may now only include data related to hours 0-4). Accordingly, embodiments of the invention may replace the stored CBT by copying data from the memory CBT to a disk. Accordingly, at any point in time, a saved bitmap or CBT combined with data in the journal may be used by embodiments of the invention in order to produce an accurate CBT that enables identifying all blocks or storage units that were modified, in the protected system, since the last backup.

According to embodiments of the invention, a stored CBT may be used to initialize a system. For example, upon restarting a server or other computing device (e.g., computing device 700) that carries out a method of tracking modifications of a protected storage system or a method of creating an incremental backup according to embodiments of the invention as described herein, embodiments of the invention may load a stored CBT into a memory to create or produce a memory CBT as described herein. In another case, following a reset or crash of a computing device or application, a stored CBT may be loaded into memory and used as a memory (or volatile or transient) CBT as described herein.

For example, a system and method according to embodiments of the invention may load a stored CBT object from a disk into a memory to produce a memory CBT object and mark, e.g., by setting bits as described, in the memory CBT object, storage units in the protected storage system that were modified based on traversing the journal. The resulting memory CBT may be usable for creating an incremental backup as described.

For example, after loading a stored CBT into memory, a system and method according to embodiments of the invention may examine some or all entries in a journal, identify or determine which storage units in a protected system were modified (as described, the journal includes information on writes or other modifications to a protected system) and mark, in a bitmap, each or every storage unit that was modified. For example, if, when traversing the journal, a system or method according to embodiments of the invention discovers that block 17 was modified (e.g., written to) then the system or method may set bit 17 in a bitmap to one thus indicating or reflecting the fact that block 17 was modified.

After creating a backup (e.g., a full, partial or incremental backup), the memory CBT and the stored CBT are cleared or initialized. For example, clearing or initializing a CBT may include setting all bits in a bitmap to zero ("0").

For example, a system and method according to embodiments of the invention may create, by a recovery system, a backup for a protected storage system for a selected time point (e.g., as described herein), clearing, by the recovery system, a memory CBT object and a stored CBT object and, marking, by the recovery system and in the memory CBT object. The recovery system may then mark, in the memory CBT object, storage units of the protected storage system that were modified after the selected time point based on traversing the journal from the selected time point to the end of the journal to thereby produce a CBT object usable for an incremental backup.

For example, assuming the current journal time window covers or reflects modifications made to a protected system from the time of 08:00 to 12:00. Assuming a user requests an incremental backup for the selected time of 10:00. After creating an incremental backup for 10:00 as requested, a recovery system or method according to some embodiments may clear its memory and stored CBTs, e.g., set all bits in the CBTs to zero. A recovery system or method according to some embodiments may, after clearing the memory and stored CBTs, examine a journal from the selected time (e.g., 10:00) to the end of the journal (12:00 in the current example) to identify or determine which blocks of the protected system were modified, and mark, in the memory CBT, all blocks in the protected system that were modified. Accordingly, a memory CBT that is usable for creating the next incremental backup is produced. For example, in the above case, the memory CBT produced can be used for an incremental backup which will not include modifications that were made before 10:00 (note these modifications were included in the incremental backup that was made prior to clearing the CBTs and filling the memory CBT with information). The memory CBT produced in the above example includes information related to the time slot of 10:00 to 12:00, exactly the time slot relevant to an incremental backup than may be required after the incremental backup for up to 10:00 was made.

A recovery system or method according to some embodiments may provide a CBT for a selected time point. For example, two memory CBTs may be created and maintained in a memory such as memory 720. A first memory CBT referred to herein as "end CBT" may be a memory CBT as described herein, e.g., a memory CBT that is updated, by the recovery system when data is added to a journal as described. For example, when a write operation is inserted to the journal as described, the bit representing the storage unit written to may be set in the end CBT. A second memory CBT referred to herein as "start CBT" may be a memory CBT as described herein. However, rather than updating the start CBT when data is entered into the journal, the start CBT may be updated when data leaves the journal. In addition, upon removing, from the journal, data related to a modification of a storage unit in the protected storage system, recovery system or method according to some embodiments may mark the storage unit in the start CBT object. For example, rather than initializing a start CBT by traversing the journal from a selected time to the end of the journal, the start CBT may be initialized by clearing it, e.g., setting all bits to zero. As described, bits in the start CBT may only be set when data is removed from the journal.

To create an incremental backup for a selected time point, e.g., upon receiving a selected time point for an incremental backup, a recovery system or method according to some embodiments may mark, in the start CBT object, storage units that were modified by traversing the journal from a time point of a previous backup to the selected time point to thereby produce a CBT object usable for an incremental backup.

For example, in the above example, assuming that after creating the incremental backup for 10:00 as described, a user requests an incremental backup for 11:00. Note that the end CBT may have been updated to reflect modifications made between 10:00 to 12:00 and therefore cannot be readily used to provide a CBT for an incremental backup for 11:00. The start CBT may be used to provide an incremental backup for 11:00 by traversing the journal from 10:00 (the time point of the previous backup) to 11:00 (the selected time point) and marking, in the start CBT, all storage units that were modified between 10:00 and 11:00.

In some embodiments, or based on a configuration, if a selected time point for an incremental backup is in the time window of the journal, a recovery system or method according to some embodiments may use the end CBT (or the memory CBT). For example, assuming the journal currently covers the time window of 12:00 to 14:00 and a user requests an incremental backup for 13:00. If high accuracy is not required, a recovery system or method according to some embodiments may use the memory (or end) CBT for the incremental backup thus effectively providing an incremental backup for 14:00 and not 13:00.

Embodiments of the invention may increase the efficiency of creating a backup as well as reduce the size of content provided as a backup. For example, referring to storage units or blocks in a protected system by their numbers, assuming block 17 was modified at 13:00 and a backup was requested and provided at 13:15. Assuming block 17 remains unchanged, without using a CBT as described, a subsequent backup, e.g., one created and provided at 14:00 may include block 17 even though it was not changed since last backup.

According to embodiments of the invention, after a backup is created (e.g., in the form of a replica on a target disk), a memory CBT may be cleared. For example, after the backup of 13:15 in the above example is created, a memory CBT may be cleared. Accordingly, when a subsequent backup needs to be created (e.g., the 14:00 backup), an embodiment may examine a CBT and avoid including in the backup (or replica) blocks that were not modified since last backup, thus saving both time and storage space.

In some embodiments, a region locator may be generated based on a CBT. For example, assuming a very large journal (e.g., one with a time window of 3 days) and further assuming that during the time window of the journal, a number of backups were created, when a backup for a specific time window is requested, an embodiment may first determine which of the storage units were modified during the specific time window based on a CBT as described and generate a region-locator that only includes information related to the storage units indicated as modified in the CBT. For example, typically, the larger the journal, the larger is the region-locator created. Accordingly, to save space and costs, e.g., in cases such as when the journal is large and/or a number of backups related to time periods which are included in the journal's time window are created, embodiments of the invention may generate a CBT specific region-locator. For example, in some embodiments, a CBT specific region-locator is a region-locator that is created or updated based on a specific CBT as described. For example, in some embodiments, a CBT is created for a specific time slot, time period or time window and a specific region-locator (that is, a CBT specific region-locator, or a region locator that is created based on a specific CBT) is created based on the CBT such that the region-locator only includes references and other information related to the storage units marked in the CBT.

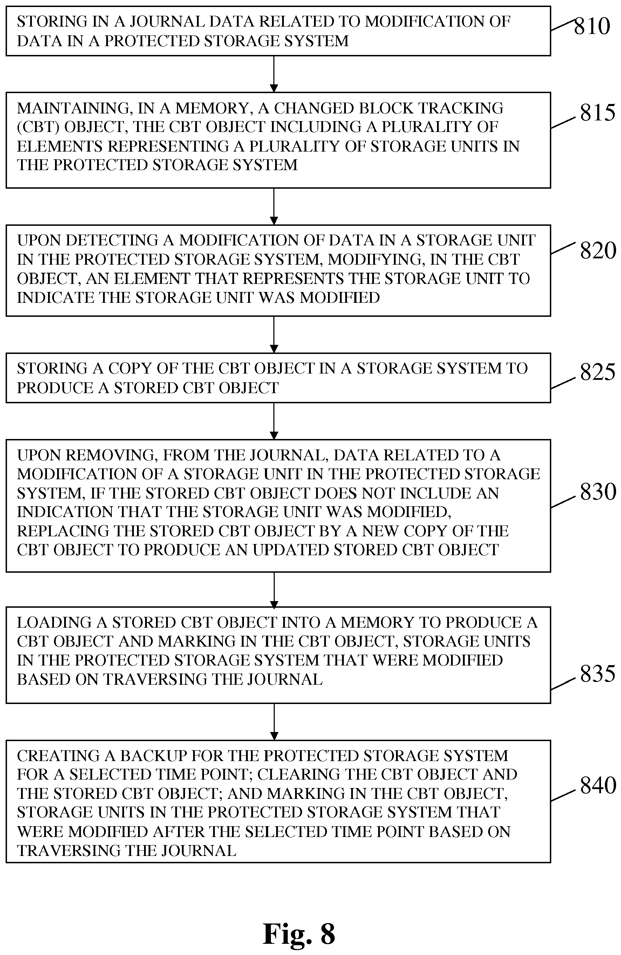

Reference is made to Fig. 8, a flowchart of a method for generating an incremental backup according to some embodiments of the present invention.

As shown by block 810 data related to a modification of data in a protected system may be written to or entered into a journal. For example, information related to any one of: a modification (e.g., a change of text) of data in a protected system, deletion of data (e.g., deleting a document) and writing of new data may be entered into a journal as described herein.

As shown by block 815, a CBT may be maintained in a memory and may include elements (e.g., bits) that represent storage units in a protected system. For example, a bitmap for representing 1024 blocks in a protected disk may include 1024 bits where, for example, bit 82 in the bitmap represents block 82 and, if block 82 was modified after last backup was created, bit 82 may be set to one, otherwise, bit 82 may be set to zero.

As shown by block 820, an element in the CBT may be modified upon detecting a modification of data in the protected system. For example, an element modified in a CBT may be a bit, and a modification of an element in a CBT may be, or may include, setting the bit to one or zero ("1" or "0") as known in the art. For example, if data in block or offset number 173 in the protected system was written to, deleted or modified, bit number 173 in a CBT may be set to one thus indicating that data in block or offset 173 was modified.

As shown by block 825, a stored (or persistent) CBT may be created, generated or produced by storing a copy of the memory CBT in a storage system. For example, a copy of a memory CBT may be stored on a target disk or other storage system.

As shown by block 830, a stored CBT may be kept up to date by ensuring that the stored CBT includes information related to data that is removed from the journal. For example and as shown by block 830, upon removing, from the journal, data related to a modification of a storage unit, if the stored CBT object does not include an indication that the storage unit was modified, the stored CBT may be replaced by a copy of the current memory CBT object and accordingly, an updated stored CBT object may be created.

As shown by block 835, a copy (or data in) a stored CBT may be loaded into memory to produce or create a memory CBT and the memory CBT may be made to reflect modification of data in the protected system by traversing the journal. For example, a memory CBT usable for creating an incremental backup may be generated by traversing a journal from the time point of the last backup to the end of the journal and marking, in the memory CBT, all storage units that were modified since the last backup was made.

As shown by block 840, after creating a backup for a selected time point, the memory and stored CBTs may be cleared (e.g., by setting all bits in bitmaps to zero) and the memory CBT may then be updated by traversing the journal from the selected time point to the end of the journal and marking, in the memory CBT, all storage units that were changed after the selected time point.

While certain features of the invention have been illustrated and described herein, many modifications, substitutions, changes, and equivalents may occur to those skilled in the art.

Various embodiments have been presented. Each of these embodiments may of course include features from other embodiments presented, and some embodiments not specifically described may include various features described herein.

## Claims

1. A method of protecting data of a protected storage system (225) in a recovery system (150, 270) comprising a volatile memory (720), a journal (110, 240) and a target disk (120, 250) the method comprising:
storing, in the volatile memory (720), a memory changed block tracking "CBT" object, the memory CBT object including a plurality of elements representing a plurality of storage units in the protected storage system (225) to track changes since a last backup;
storing a copy of the memory CBT object in a storage system (730) to produce a stored CBT object;
storing in a target disk (250) in the recovery system (150, 270) a replica of the protected storage system (225) from before a time window;
upon detecting a recent modification of data in a storage unit in the protected storage system (225), storing in a journal (110, 240) in the recovery system (150, 270) data and metadata related to the modification, and modifying, in the memory CBT object, an element that represents the storage unit to indicate the storage unit was modified, wherein the metadata includes a time the data was modified, and wherein the journal stores modifications related to a specific time window;
periodically removing from the journal (110, 240) old data related to at least one past modification of a storage unit in the protected storage system (225) that occurred before the time window, and applying the old data to the target disk (250); and
upon removing, if the stored CBT object does not include an indication of the at least one past modification, storing a copy of the memory CBT object in the storage system (730) to update the stored CBT object, and clearing the memory CBT and the stored CBT object after a backup.

2. The method of claim 1, comprising:
loading, following a crash of the recovery system (150, 270) , the stored CBT object into the volatile memory (720) to produce the memory CBT object; and
marking, in the memory CBT object, storage units in the protected storage system (225) that were modified based on traversing the journal (110, 240) to thereby render the memory CBT object usable for an incremental backup.

3. The method of claim 1 or claim 2, comprising:
creating a backup for the protected storage system (225) for a selected time point;
clearing the memory CBT object and the stored CBT object; and
marking in the memory CBT object, storage units in the protected storage system (225) that were modified after the time point based on traversing the journal (110, 240) from the time point to the end of the journal (110, 240) to thereby render the memory CBT object usable for an incremental backup.

4. The method of claim 1 or claim 2, comprising:
loading the stored CBT object into the volatile memory (720) to produce a start CBT object;
upon said removing, marking the storage unit in the start CBT object;
receiving a selected time point for an incremental backup; and
marking, in the start CBT object, storage units that were modified by traversing the journal (110, 240) from a time point of a previous backup to the selected time point to thereby produce a start CBT object usable for an incremental backup.

5. The method of claim 1 or claim 2, comprising creating an incremental backup by storing, on a storage system (730), a copy of data in a storage unit if the storage unit is marked in the memory CBT object.

6. The method of claim 1 or claim 2, comprising:
creating an incremental backup for the protected storage system (225) for a selected time point;
clearing the memory CBT object and clearing the updated stored CBT object; and
marking in the memory CBT object, storage blocks in the protected storage system (225) that were modified after the selected time point based on traversing the journal (110, 240) from the selected time point to the end of the journal (110, 240) to thereby render the memory CBT object usable for an incremental backup.

7. The method of any of the preceding claims, further comprising generating a region-locator structure based on the memory CBT object, wherein the region locator structure includes a list of addresses and, for each address in the list, a reference to a last data that was written to the address.

8. A recovery system for generating backups, the recovery system (150, 270) comprising:
a storage system (730);
a journal (110, 240);
a target disk (120, 250);
a volatile memory (720); and
a processor (705) configured to perform the method of any of the preceding claims.

9. The system of claim 8 wherein the recovery system (270) is an object-based system.

## Patentansprüche

1. Verfahren zum Schützen von Daten eines geschützten Speichersystems (225) in einem Wiederherstellungssystem (150, 270), umfassend einen flüchtigen Speicher (720), ein Protokoll (110, 240) und ein Ziellaufwerk (120, 250), wobei das Verfahren wie folgt umfasst:
Speichern eines CBT-(Changed Block Tracking)-Speicherobjekts in dem flüchtigen Speicher (720), wobei das CBT-Speicherobjekt eine Vielzahl von Elementen aufweist, die eine Vielzahl von Speichereinheiten in dem geschützten Speichersystem (225) repräsentieren, um Änderungen seit einem letzten Backup zu verfolgen;
Speichern einer Kopie des CBT-Speicherobjekts in einem Speichersystem (730), um ein gespeichertes CBT-Objekt zu erzeugen;
Speichern eines Replikats des geschützten Speichersystems (225) von bevor dem Zeitfenster auf einem Ziellaufwerk (250) in dem Wiederherstellungssystem (150, 270);
beim Erfassen einer neuen Modifikation von Daten in einer Speichereinheit in dem geschützten Speichersystem (225) werden Daten und Metadaten, die auf die Modifikation bezogen sind, in einem Protokoll (110, 240) in dem Wiederherstellungssystem (150, 270) gespeichert und ein Element, das die Speichereinheit repräsentiert, wird in dem CBT-Speicherobjekt modifiziert, um anzuzeigen, dass die Speichereinheit modifiziert wurde, wobei die Metadaten eine Zeit aufweisen, zu der die Daten modifiziert wurden, und wobei das Protokoll Modifikationen, die auf ein spezifisches Zeitfenster bezogen sind, speichert;
in regelmäßigen Abständen Entfernen alter Daten aus dem Protokoll (110, 240), die mindestens auf eine vergangene Modifikation einer Speichereinheit in dem geschützten Speichersystem (225) bezogen sind, die vor dem Zeitfenster stattfand, und Übernehmen der alten Daten auf das Ziellaufwerk (250); und
falls das gespeicherte CBT-Objekt beim Entfernen keine Indikation der mindestens einen vergangenen Modifikation aufweist, Speichern einer Kopie des CBT-Speicherobjekts in dem Speichersystem (730), um das gespeicherte CBT-Objekt zu aktualisieren, und Löschen des CBT-Speichers und des gespeicherten CBT-Objekts nach einem Backup.

2. Verfahren nach Anspruch 1, wie folgt umfassend:
Laden des gespeicherten CBT-Objekts in den flüchtigen Speicher (720) nachdem ein Absturz des Wiederherstellungssystems (150, 270) stattgefunden hat, um das CBT-Speicherobjekt zu erzeugen; und
Markieren von Speichereinheiten in dem geschützten Speichersystem (225) in dem CBT-Speicherobjekt, die basierend auf einem Durchlaufen des Protokolls (110, 240) modifiziert wurden, um das CBT-Speicherobjekt hierdurch für einen inkrementellen Backup brauchbar zu machen.

3. Verfahren nach Anspruch 1 oder Anspruch 2, wie folgt umfassend:
Erstellen eines Backups für das geschützte Speichersystem (225) für einen ausgewählten Zeitpunkt; Löschen des CBT-Speicherobjekts und des gespeicherten CBT-Objekts; und
Markieren von Speichereinheiten in dem geschützten Speichersystem (225) in dem CBT-Speicherobjekt, die nach dem Zeitpunkt basierend auf einem Durchlaufen des Protokolls (110, 240) ab dem Zeitpunkt bis zum Ende des Protokolls (110, 240) modifiziert wurden, um hierdurch das CBT-Speicherobjekt für einen inkrementellen Backup brauchbar zu machen.

4. Verfahren nach Anspruch 1 oder Anspruch 2, wie folgt umfassend:
Laden des gespeicherten CBT-Objekts in einen flüchtigen Speicher (720), um ein CBT-Startobjekt zu erzeugen;
Bei dem Entfernen Markieren der Speichereinheit in dem CBT-Startobjekt;
Empfangen eines ausgewählten Zeitpunkts für einen inkrementellen Backup; und
Markieren von Speichereinheiten in dem CBT-Startobjekt, die basierend auf einem Durchlaufen des Protokolls (110, 240) ab dem Zeitpunkt eines vorherigen Backups bis zu dem ausgewählten Zeitpunkt modifiziert wurden, um hierdurch ein CBT-Startobjekt zu erzeugen, das für einen inkrementellen Backup brauchbar ist.

5. Verfahren nach Anspruch 1 oder Anspruch 2, umfassend Erstellen eines inkrementellen Backups, indem eine Kopie von Daten in einer Speichereinheit in einem Speichersystem (730) gespeichert wird, falls die Speichereinheit in dem CBT-Speicherobjekt markiert ist.

6. Verfahren nach Anspruch 1 oder Anspruch 2, wie folgt umfassend:
Erstellen eines inkrementellen Backups für das geschützte Speichersystem (225) für einen ausgewählten Zeitpunkt;
Löschen des CBT-Speicherobjekts und Löschen des aktualisierten gespeicherten CBT-Objekts; und
Markieren von Speicherblöcken in dem geschützten Speichersystem (225) in dem CBT-Speicherobjekt, die basierend auf einem Durchlaufen des Protokolls (110, 240) nach dem ausgewählten Zeitpunkt ab dem ausgewählten Zeitpunkt bis zum Ende d3es Protokolls (110, 240) modifiziert wurden, um hierdurch das CBT-Objekt für einen inkrementellen Backup brauchbar zu machen.

7. Verfahren nach einem der vorhergehenden Ansprüche, ferner umfassend Erzeugen einer regionalen Positionsgeberstruktur, welche auf dem CBT-Speicherobjekt basiert, wobei die regionale Positionsgeberstruktur eine Liste von Adressen aufweist und wobei ein Verweis jeweils auf die letzten Daten für jede Adresse in der Liste an die Adresse geschrieben wurde.

8. Wiederherstellungssystem zum Erzeugen von Backups, wobei das Wiederherstellungssystem (150, 270) wie folgt umfasst:
ein Speichersystem (730);
ein Protokoll (110, 240);
ein Ziellaufwerk (120, 250);
einen flüchtigen Speicher (720); und
einen Prozessor (705), der dazu konfiguriert ist, das Verfahren nach einem der vorhergehenden Ansprüche durchzuführen.

9. System nach Anspruch 8, wobei das Wiederherstellungssystem (270) ein objektbasiertes System ist.

## Revendications

1. Procédé de protection des données d'un système de stockage protégé (225) dans un système de recouvrement (150, 270) comprenant une mémoire volatile (720), un journal (110, 240) et un disque cible (120, 250), le procédé consistant à :
stocker, dans la mémoire volatile (720), un objet CBT (de l'anglais, *Changed Block Tracking*) de mémoire de suivi de blocs modifiés, l'objet CBT de mémoire comprenant une pluralité d'éléments représentant une pluralité d'unités de stockage dans le système de stockage protégé (225) permettant de suivre les changements depuis une dernière sauvegarde;
stocker une copie de l'objet CBT de mémoire dans un système de stockage (730) pour produire un objet CBT stocké ;
stocker dans un disque cible (250) dans le système de recouvrement (150, 270) une réplique du système de stockage protégé (225) avant une fenêtre temporelle ;
lors de la détection d'une modification récente de données dans une unité de stockage dans le système de stockage protégé (225), stocker dans un journal (110, 240) dans le système de recouvrement (150, 270) des données et des métadonnées liées à la modification, et modifier, dans l'objet CBT de mémoire, un élément qui représente l'unité de stockage pour indiquer que l'unité de stockage a été modifiée, les métadonnées comprenant le point temporel auquel les données ont été modifiées, et le journal stockant les modifications liées à une fenêtre temporelle spécifique ;
retirer périodiquement du journal (110, 240) les anciennes données liées à au moins une modification précédente d'une unité de stockage dans le système de stockage protégé (225) qui s'est produite avant la fenêtre temporelle, et appliquer les anciennes données au disque cible (250) ; et
lors du retrait, si l'objet CBT stocké n'inclut pas une indication de l'au moins une modification précédente, stocker une copie de l'objet CBT de mémoire dans le système de stockage (730) afin de mettre à jour l'objet CBT stocké, et effacer la mémoire CBT et l'objet CBT stocké après une sauvegarde.

2. Procédé selon la revendication 1, consistant à :
charger, suite à un plantage du système de recouvrement (150, 270), l'objet CBT stocké dans la mémoire volatile (720) pour produire l'objet CBT de mémoire ; et
marquer, dans l'objet CBT de mémoire, les unités de stockage dans le système de stockage protégé (225) qui ont été modifiées sur la base du parcours du journal (110, 240) afin de rendre ainsi l'objet CBT de mémoire utilisable pour une sauvegarde incrémentielle.

3. Procédé selon la revendication 1 ou la revendication 2, consistant à :
créer une sauvegarde pour le système de stockage protégé (225) pour un point temporel sélectionné ;
effacer l'objet CBT de mémoire et l'objet CBT stocké ; et
marquer dans l'objet CBT de mémoire, les unités de stockage dans le système de stockage protégé (225) qui ont été modifiées après le point temporel sur la base du parcours du journal (110, 240) depuis le point temporel jusqu'à la fin du journal (110, 240) afin de rendre ainsi l'objet CBT de mémoire utilisable pour une sauvegarde incrémentielle.

4. Procédé selon la revendication 1 ou la revendication 2, consistant à :
charger l'objet CBT stocké dans la mémoire volatile (720) pour produire un objet CBT de départ ;
lors dudit retrait, marquer l'unité de stockage dans l'objet CBT de départ ;
recevoir un point temporel sélectionné pour une sauvegarde incrémentielle ; et
marquer, dans l'objet CBT de départ, les unités de stockage qui ont été modifiées en parcourant le journal (110, 240) à partir du point temporel d'une sauvegarde précédente jusqu'au point temporel sélectionné pour ainsi produire un objet CBT de départ utilisable pour une sauvegarde incrémentielle.

5. Procédé selon la revendication 1 ou la revendication 2, comprenant la création d'une sauvegarde incrémentielle en stockant, sur un système de stockage (730), une copie de données dans une unité de stockage si l'unité de stockage est marquée dans l'objet CBT de mémoire.

6. Procédé selon la revendication 1 ou la revendication 2, consistant à :
créer une sauvegarde incrémentielle pour le système de stockage protégé (225) pour un point temporel sélectionné ;
effacer l'objet CBT de mémoire et effacer l'objet CBT stocké mis à jour ; et
marquer dans l'objet CBT de mémoire, des blocs de stockage dans le système de stockage protégé (225) qui ont été modifiés après le point temporel sélectionné sur la base du parcours du journal (110, 240) depuis le point temporel sélectionné jusqu'à la fin du journal (110, 240) afin de rendre ainsi l'objet CBT de mémoire utilisable pour une sauvegarde incrémentielle.

7. Procédé selon l'une quelconque des revendications précédentes, comprenant en outre la génération d'une structure de localisateur de région basée sur l'objet CBT de mémoire, dans lequel la structure de localisateur de région comprend une liste d'adresses et, pour chaque adresse de la liste, une référence à une dernière donnée qui a été écrit à l'adresse.

8. Système de recouvrement pour générer des sauvegardes, le système de recouvrement (150, 270) comprenant :
un système de stockage (730) ;
un journal (110, 240);
un disque cible (120, 250);
une mémoire volatile (720); et
un processeur (705) configuré pour exécuter le procédé selon l'une quelconque des revendications précédentes.

9. Système selon la revendication 8, le système de recouvrement (270) étant un système à base d'objets.
